(19) Europäisches Patentamt
European Patent Office
Office européen des brevets

(11) **EP 4 320 425 B1**

(12) **EUROPEAN PATENT SPECIFICATION**

(45) Date of publication and mention
of the grant of the patent:
**06.05.2026 Bulletin 2026/19**

(21) Application number: **22721349.3**

(22) Date of filing: **07.04.2022**

(51) International Patent Classification (IPC):
**G01N 21/552** $^{(2014.01)}$  **G01N 21/27** $^{(2006.01)}$

(52) Cooperative Patent Classification (CPC):
**G01N 21/554; G01N 21/272**

(86) International application number:
**PCT/EP2022/059308**

(87) International publication number:
**WO 2022/214611 (13.10.2022 Gazette 2022/41)**

(54) **METHOD, APPARATUS AND SYSTEM FOR CHARACTERIZING TRANSIENT INTERACTIONS BETWEEN BIOMOLECULES**

VERFAHREN, VORRICHTUNG UND SYSTEM ZUR CHARAKTERISIERUNG VON TRANSIENTEN WECHSELWIRKUNGEN ZWISCHEN BIOMOLEKÜLEN

PROCÉDÉ, APPAREIL ET SYSTÈME PERMETTANT DE CARACTÉRISER DES INTERACTIONS TRANSITOIRES ENTRE DES BIOMOLÉCULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2021 EP 21167323**

(43) Date of publication of application:
**14.02.2024 Bulletin 2024/07**

(73) Proprietor: **Helmholtz Zentrum München Deutsches Forschungszentrum für Gesundheit und Umwelt (GmbH) 85764 Neuherberg (DE)**

(72) Inventors:
• **CUI, Jian**
**80796 Munich (DE)**
• **RIDDERBEEK, Korneel**
**80809 Munich (DE)**

(74) Representative: **Linsmeier, Josef Wallinger Ricker Schlotter Tostmann Patent- und Rechtsanwälte Partnerschaft mbB Zweibrückenstrasse 5-7 80331 München (DE)**

(56) References cited:
**EP-A1- 2 587 252       WO-A1-2016/075229**

• WILLETT DANIEL R ET AL: "LSPR Sensor Combining Sharp Resonance and Differential Optical Measurements", PLASMONICS, SPRINGER US, BOSTON, vol. 9, no. 6, 3 August 2014 (2014-08-03), pages 1391 - 1396, XP035940717, ISSN: 1557-1955, [retrieved on 20140803], DOI: 10.1007/S11468-014-9754-8
• BEYLER ANDREW PAUL: "Single-nanocrystal photon correlation : a versatile tool for elucidating basic physics and characterizing applications-relevant properties", 1 September 2015 (2015-09-01), XP55841515, Retrieved from the Internet <URL:https://dspace.mit.edu/handle/1721.1/101452> [retrieved on 20210915]
• LIU G L ET AL: "TIME-RESOLVED OPTICAL SENSING OF OLIGONUCLEOTIDE HYBRIDIZATION VIA AU COLLOIDAL NANOPARTICLES", JOURNAL OF NANOSCIENCE AND NANOTECHNOLOGY, AMERICAN SCIENTIFIC PUBLISHERS, US, vol. 5, no. 11, 1 November 2005 (2005-11-01), pages 1933 - 1937, XP008070330, ISSN: 1533-4880, DOI: 10.1166/JNN.2005.417

- **CUI JIAN ET AL: "Deconstructing the photon stream from single nanocrystals: from binning to correlation", vol. 43, no. 4, 1 January 2014 (2014-01-01), UK, pages 1287 - 1310, XP055841508, ISSN: 0306-0012, Retrieved from the Internet <URL:https://pubs.rsc.org/en/content/articlepdf/2014/cs/c3cs60330j> DOI: 10.1039/C3CS60330J**
- **BROKMANN ET AL.: "Photon-correlation Fourier spectroscopy", OPTICS EXPRESS, vol. 14, no. 13, 2006, pages 6333 - 6341, XP055842053**
- **BEYLER ANDREW PAUL: "Single-nanocrystal photon correlation : a versatile tool for elucidating basic physics and characterizing applications-relevant properties", 1 September 2015 (2015-09-01), XP055841515, Retrieved from the Internet <URL:https://dspace.mit.edu/handle/1721.1/101452> [retrieved on 20210915]**
- **MARSHALL LISA F. ET AL: "Extracting Spectral Dynamics from Single Chromophores in Solution", PHYSICAL REVIEW LETTERS, vol. 105, no. 5, 1 July 2010 (2010-07-01), US, pages 67, XP055841570, ISSN: 0031-9007, Retrieved from the Internet <URL:https://journals.aps.org/prl/pdf/10.1103/PhysRevLett.105.053005> DOI: 10.1103/PhysRevLett.105.053005**

**Description**

The present invention relates to a method, apparatus and system for characterizing transient interactions, in particular rapid transient interactions, between biomolecules.

Biomolecular interactions form the foundation of nearly all cellular processes.

However, many of these interactions occur on timescales that cannot be accessed using conventional methods, such as surface plasmon resonance (SPR). Nuclear magnetic resonance (NMR) can access the high temporal and spatial resolution needed to resolve these interactions, but NMR is generally limited to small biomolecules. Fluorescent dyes can be used via Förster resonance energy transfer (FRET) to potentially determine these interaction rates, however fluorescent methods are limited by emitter photobleaching and the need to specifically label biomolecules and remove unlabeled dyes.

The patent application WO 2016/075229 A1 discloses a biosensor detecting binding and unbinding events based on the shift of the plasmonic resonance of gold nanoparticles. Plasmon shift between bound and unbound states result in changes of detected signal intensity.

The present invention is based on the problem of providing an improved method, apparatus and system for characterizing transient interactions, in particular rapid transient interactions, between biomolecules.

The problem is solved by a method and apparatus according to the independent claims and a system comprising such an apparatus.

Aspects of the invention are based on the approach of using plasmonic nanoparticles as local sensors for sensing fast transient interactions between biomolecules. Plasmonic nanoparticles are particles made out of a, preferably metallic, material with dimensions preferably smaller than 1 $\mu$m (< $10^{-6}$ m). The high density of electrons in these particles can resonate with light incident on the particles generating so-called localized surface plasmon resonances (LSPRs). At this resonance, the electromagnetic waves are confined tightly around the particle, making the resonance very sensitive to changes in the local dielectric environment. Due to this effect, the optical response changes as a function of a changing environment, so that plasmonic nanoparticles act as local (refractive index) sensors, wherein interacting molecules, for example proteins, around the nanoparticles change the optical output of the nanoparticles. For further details regarding the use of plasmonic nanoparticles as local refractive index sensors it is referred to Maier, S. A., Plasmonics: fundamentals and applications, Springer Science & Business Media (2007). This local sensitivity of plasmonic nanoparticles implies that the optical output of the nanoparticle reflects the dynamics of events occurring around the particles. Therefore, the scattering signal of plasmonic nanoparticles can be used to study and characterize biomolecular interactions. Using the scattering of such particles yields orders of magnitude more signal than fluorescent emitters, because they are not limited to by "slow" absorption-emission photophysics and by photobleaching of dyes. In a preferred application, a biomolecule of interest A is immobilized on the nanoparticle surface, then biomolecule B is added to the mixture, light is shone on the sample, and the resulting scattering light is collected.

Within the meaning of present disclosure, the term "transient interaction(s)" and its variations, such as "transiently interact" or "interact transiently", preferably relate to any non-stable and/or temporary and/or non-permanent and/or reversible interaction between biomolecules (being preferably in a thermal equilibrium), in particular in distinction to a non-transient and/or stable and/or permanent and/or irreversible interaction, in particular binding, of biomolecules. For example, a transient interaction between biomolecule A and biomolecule B means that A and B interact, e.g. bind and/or associate and/or are in a bound state, for a usually very short time, before reversibly dissociating to an unbound state and so on. In contrast to this, a non-transient interaction between A and B means that, once A and B are in a bound state or an according chemical reaction is completed, A and B remain in the bound state.

Basically, the method, apparatus and system according to present disclosure can be used in any kind of biological, medical and/or industrial application, for example as an analytical tool in the field of protein biology or for drug screening. Drug screening is the process by which potential drugs are identified and optimized before selection of a candidate drug to progress to clinical trials. It can involve screening large libraries of chemicals for a particular biological activity in high-throughput screening assays.

In the invention, plasmonic nanoparticles and biomolecules to be investigated are contained in a mixture, which is preferably in a thermal equilibrium, in particular a solution and/or dispersion, to allow first biomolecules to adhere to the surface of the nanoparticles, on the one hand, and to allow second biomolecules to transiently interact with the first biomolecules adherent to the nanoparticles, on the other hand. That is, while the components (i.e. a plurality of nanoparticles and biomolecules) according to present implementation are preferably dispersed in a solution or dispersion, respectively, conventional methods look at interactions happening on extended surfaces, where e.g. single nanoparticles are immobilized on an extended surface, e.g. a glass surface. Thus, while nanoparticles and biomolecules dispersed in a solution or dispersion can more or less freely interact with each other, biomolecule-nanoparticle interactions happening on extended surfaces may be strongly influenced by disruptions in diffusion due to the presence of the extended surface.

The mixture is irradiated with first electromagnetic radiation, in particular broadband electromagnetic radiation such as white light, and second electromagnetic radiation, which is scattered by the mixture while being irradiated with first electromagnetic radiation, is detected over time or as a function of time (i.e. "time-resolved") and for different wavelengths or energies (i.e. "spectrally-resolved") so as to obtain intensity signals, whereby fluctuations in the intensity signals (also referred to as "intensity fluctuations") represent and/or contain information about changes and/or fluctuations of wavelengths or energies contained the spectrum the second electromagnetic radiation. By analyzing the intensity signals, at least one interaction parameter which, in particular quantitatively, characterizes fast transient interactions between the first and second biomolecules can be determined. For example, transition rates $k_{on}$, $k_{off}$ between states, e.g. from bound to unbound state and vice versa, and/or the dissociation constant $K_D$, can be determined even on sub-millisecond timescales. In this way, it is possible to characterize fast transient biomolecular interactions typically unresolved in conventional measurements. That is, while conventional methods suffer from the adverse effects of surface-immobilization of nanoparticles, limited time resolution and undesired heating from single-particle measurements, present implementation uses a statistical analysis of interactions occurring in a mixture, in particular dispersion, of a plurality of nanoparticles and biomolecules to allow for an improved quantitative characterization of rapid transient interactions between biomolecules with very high sensitivity and exceptionally high time resolution.

In summary, the invention allows for characterizing, in particular quantitatively characterizing, rapid transient interactions between biomolecules, which are contained in a mixture and/or solution, with very high sensitivity and time resolution.

Within the present disclosure, the term "biomolecule" preferably relates to any kind of biological molecules, such as molecules present in organisms that are essential to one or more typically biological processes, such as cell division, morphogenesis, or development. For example, the term "biomolecule" includes large macromolecules such as proteins, carbohydrates, lipids, and nucleic acids, as well as small molecules such as primary metabolites, secondary metabolites and natural products.

Preferably, the mixture can be obtained by mixing the plasmonic nanoparticles and the first biomolecules to allow first biomolecules to adhere to the nanoparticles, and then adding second biomolecules to allow second biomolecules to transiently interact with the first biomolecules adherent to the nanoparticles. Preferably, the mixture is in a thermal equilibrium. In this manner, the mixture is closer to real physiological conditions than with methods based on a non-equilibrium mixing. Alternatively, it is also possible to obtain the mixture by pouring together and/or mixing the plasmonic nanoparticles and the first and second biomolecules simultaneously, or by mixing the first and second biomolecules and then adding the plasmonic nanoparticles.

Within the meaning of present disclosure, the term "dispersion" in which the plasmonic nanoparticles and biomolecules to be investigated are preferably contained, preferably relates to any heterogeneous mixture of substances comprising the plasmonic nanoparticles, also referred to as "colloidal nanoparticles", the biomolecules, and a dispersion medium or dispersing agent (e.g. water), wherein at least two of the substances do not or hardly dissolve in each other. In the so-called disperse phase, the plasmonic nanoparticles and the biomolecules are finely dispersed in the dispersion medium or agent.

Within the meaning of present disclosure, the term "solution" in which the plasmonic nanoparticles and biomolecules to be investigated are preferably contained, is used synonymously to the term "dispersion" and vice versa, unless otherwise stated.

According to one alternative of the invention, the step of detecting the second electromagnetic radiation comprises: splitting the second electromagnetic radiation into a first partial beam and a second partial beam; providing one or more different path length differences between the first partial beam and the second partial beam; superimposing the first partial beam and the second partial beam for each of the path length differences so as to obtain a first interference beam and a second interference beam for each of the path length differences; and separately detecting the first interference beam and the second interference beam by means of two separate detectors at different times and for each of the path length differences so as to obtain two series of intensity signals representing intensities of the first interference beam and second interference beam, respectively, at the different times and for the different path length differences.

For example, the second electromagnetic radiation can be directed to a Michelson interferometer, which comprises a beam splitter that splits the second electromagnetic radiation into the first and second partial beam and a movable arm for providing different path length differences. However, within the scope of this embodiment, any kind of a beam splitting device and/or path-length-difference generator can be used. For example, instead of a Michelson interferometer a so-called "common-path interferometer" can be used which does not split the beam but still provides an optical path length difference.

Preferably, the path-length-difference generator may comprise a reflecting element mounted on a movable stage provided in one of the interferometer arms. Preferably, the stage is slowly moving (also referred to as "scanning") and/or stepping (i.e. moving stepwise or pointwise from one point or position to another point or position) during the acquisition, that is during the step of detecting the second electromagnetic radiation. In this way, the path length difference is changing continuously and/or stepwise or pointwise, respectively, while the second electromagnetic radiation (including information about the correlation function) is being detected.

Preferably, the reflecting element and/or stage is moved stepwise or pointwise through the interferometer, wherein the intensities of the first and second interference beam are measured for each position of the reflecting element and/or stage so as to obtain an interferogram from each of the interference beams. Additionally, at each position of the reflecting element and/or stage (i.e. after each step), the interferometer stage performs a periodic motion. This is done to measure the envelope of the interferogram instead of all individual fringes. Preferably, the width of a step is between 0,1 $\mu$m to 10 mm. Preferably, the amplitude of the periodic motion is 300 to 800 nm, preferably approx. 500 nm.

Preferably, the two separate detectors can be any kind of fast optical detectors, for example, so-called single-photon detectors or single-photon counters, which provide a very fast time resolution even for weak signal intensities.

According to another alternative option of the invention, the step of detecting the second electromagnetic radiation comprises: applying the second electromagnetic radiation to at least one spectral splitting element, preferably a dichroic optical element, preferably a dichroic reflector, in particular a dichroic mirror, a beam splitter and two band-pass filters or long-pass and short-pass combination or two monochromators, so as to obtain at least one first partial beam of electromagnetic radiation having a first spectrum and/or wavelength(s) and at least one second partial beam of electromagnetic radiation having a second spectrum and/or wavelength(s) which is different from the first spectrum; and separately detecting the first partial beam and the second partial beam by means of two separate detectors at different times so as to obtain two series of intensity signals representing intensities of the first partial beam and second partial beam, respectively, at the different times and for the first and second spectrum.

Other than the previously described preferred embodiment, this alternative option does not rely on interferometric effects or require an interferometer in the narrower sense. Rather, the interferometer is exchanged with a spectral splitting element, preferably a dichroic reflector or mirror or a beam splitter and two band-pass filters or long-pass and short-pass combination or two monochromators, which generates two partial beams of different wavelengths, spectra and/or different colors, preferably by splitting the scattering spectrum in half. This is why this approach is also referred to as "dual color method". By separately detecting the two partial beams as a function of time, the change in numbers of photons arriving on either detector is determined. This number then reflects biomolecular dynamics. As with the preferred embodiment described above, the two separate detectors can be any kind of fast optical detectors, for example so-called single-photon detectors or single-photon counters, which provide a very fast time resolution even for weak signal intensities.

Preferably, at least one time auto-correlation function is determined which characterizes a time auto-correlation of a combination (also referred to as "total stream") of the two series of intensity signals, wherein at least one diffusion parameter characterizing a diffusion of the nanoparticles in the mixture is determined based on the at least one time auto-correlation function. Preferably, within the meaning of present disclosure, the term "time auto-correlation function" relates to an intensity-time auto-correlation function, which can also be referred to as "intensity auto-correlation function".

Preferably, at least one time cross-correlation function is determined which characterizes a time cross-correlation between the two series of intensity signals, wherein the at least one interaction parameter characterizing the transient binding behavior is determined based on the at least one time cross-correlation function and, optionally, also on the at least one time auto-correlation function and/or the at least one diffusion parameter characterizing the diffusion of the nanoparticles in the mixture. Preferably, within the meaning of present disclosure, the term "time cross-correlation function" relates to an intensity-time cross-correlation function which can also be referred to as "intensity cross-correlation function".

It is further preferred that the at least one time auto-correlation function and/or the at least one time cross-correlation function is determined for the different path length differences between the first partial beam and the second partial beam (in case of an interferometric measurement setup) or for the first and second spectrum (in case of the dual-color method), respectively. In case of the interferometric setup, the path length differences preferably correspond to averaged path length difference which are obtained during scanning by averaging over a small range of path length differences.

Preferably, the time auto-correlation function (i.e. the intensity-time auto-correlation function or intensity auto-correlation function) is used to correct the time cross-correlation function (i.e. the intensity-time cross-correlation function, intensity cross-correlation function) to remove effects of nanoparticle diffusion on the time cross-correlation function. In other words, the intensity auto-correlation function is used to correct the intensity cross-correlation function. This removes the effects of nanoparticle diffusion and isolates the effects of sensing. The corrected cross-correlation functions can then be studied in the time domain (as they are) or in the spectral domain (after Fourier transform, see below). This is particularly advantageous compared to conventional surface-based methods as it enables looking at freely diffusing nanoparticles over a broad range of timescales.

In some applications or circumstances, it may be possible that the at least one interaction parameter is determined based, in particular based only, on the corrected intensity cross-correlation function. In other words, in some applications or circumstances it is possible to use or only use the corrected intensity cross-correlation function to obtain the interaction parameters, in particular without needing and/or calculating the full spectral correlation function (as described in detail below).

In other applications or circumstances, it may be preferred to use more than one or even many corrected cross-correlations to construct the spectral correlation function to get a more complete picture of the ongoing transactions. For example, the magnitude of nanoparticle spectral shifts and their dynamics along with the dynamics of proteins around them are reflected in the spectral correlation function. This information can be used to determine the proximity, size, etc. of the proteins under investigation and is especially pertinent in more complicated and/or mixed systems. In other words: The full spectral correlation function gives a complete view of the magnitude of energy shifts and their timescale of the nanoparticle, which can then be related to biomolecular interactions. Alternatively, the same information can be obtained from a single corrected cross-correlation function if certain assumptions hold. The validity of these assumptions can be verified from the complete spectral correlation.

Preferably, the time cross-correlation functions, which are determined for the different path length differences, and/or the corrected cross-correlation functions (see above) are being Fourier transformed, preferably by means of a one-dimensional Fourier transformation with respect to the dimension of the path length differences, so as to obtain spectral correlation functions at different times (i.e. time lags) and for different energy or wavelength changes (i.e. energy or wavelength shifts, respectively), wherein the at least one interaction parameter, in particular the transition rate(s) $k_{on}$ and/or $k_{off}$, is determined based on the spectral correlation functions. Preferably, within the meaning of present disclosure, the term "spectral correlation function" relates to a spectral-time correlation function.

Preferably, a temporal behavior of the spectral correlation functions is determined, wherein the at least one interaction parameter, in particular the transition rate(s) $k_{on}$ and/or $k_{off}$, is determined based on the temporal behavior of the spectral correlation functions. Preferably, the determined temporal behavior of the spectral correlation functions relates to a change of magnitude or shape, e.g. width, of the spectral correlation and/or a decay of a maximum at a given energy or wavelength.

Preferably, the at least one interaction parameter, which contains biomolecular dynamic information such as $k_{on}$, $k_{off}$ and/or $K_D$, is obtained by analyzing the obtained temporal change of the spectral correlation or diffusion-corrected cross-correlation for the dual-color method and alternative PCFS methods.

Preferably, the at least one interaction parameter, which contains biomolecular dynamic information such as $k_{on}$, $k_{off}$ and/or $K_D$, is obtained by fitting at least one function reflecting the biomolecular dynamics to the obtained spectral correlation change or diffusion-corrected cross-correlation change for the dual-color method and alternative PCFS methods as a function of time. The at least one function can be, e.g., an exponentially decaying function.

Preferably, the at least one function reflecting the biomolecular dynamics is obtained based on a model, in particular a computational model, wherein biomolecular interactions occurring in the proximity of the sensing nanoparticles are simulated. Alternatively to simulating the biomolecular interactions, the at least one function reflecting the biomolecular dynamics can be obtained based on an interaction model, which is based on theoretical assumptions, e.g. including two, three, five or multitude of states, regarding the biomolecular interactions.

Preferably, the model is based on a two-state model according to which a binary interaction can be described by two states, wherein the biomolecules are either attached or detached with forward and backwards rates dictating the timescale of change. A computer simulation can mimic this system by defining two distinct peaks in the spectrum, one corresponding to the "on state" and the other to the "off state".

Preferably, determining the at least one interaction parameter, such as $k_{on}$, $k_{off}$, $K_D$, includes determining at least one parameter characterizing reversible interactions between the first and second biomolecules.

Preferably, determining the at least one interaction parameter, such as $k_{on}$, $k_{off}$, $K_D$, includes determining at least one of the following: i) a first transition rate $k_{on}$ characterizing a time rate at which transitions occur between an unbound state, in which the second biomolecules are not bound to and/or do not interact with first biomolecules, to a bound state, in which the second biomolecules are bound to and/or interact with the first biomolecules; and/or ii) a second transition rate $k_{off}$ characterizing a time rate at which transitions occur between a bound state, in which the second biomolecules are bound to and/or interact with the first biomolecules, to an unbound state, in which the second biomolecules are not bound to and/or do not interact with the first biomolecules; and/or iii) a dissociation constant $K_D$ characterizing a tendency of the first and second biomolecules to reversibly dissociate between a bound state, in which the second biomolecules are bound to and/or interact with the first biomolecules, and an unbound state, in which the second biomolecules are not bound to and/or do not interact with the first biomolecules.

Preferably, the mixture comprising the nanoparticles, first biomolecules and second biomolecules is a solution and/or dispersion, wherein the nanoparticles, first biomolecules and second biomolecules are dissolved in a solvent or dispersed in a dispersion agent, respectively.

Preferably, the nanoparticles are chosen such that their sensitivity is high, e.g. to detect single interaction events. Basically, various shapes of the nanoparticles are suitable for this purpose. For example, the nanoparticles have a shape exhibiting multiple sharp tips. For example, the nanoparticles can have a polyhedral shape, e.g. the shape of a cube. Preferably, the nanoparticles have a non-rod-like shape.

Preferably, the irradiation unit is configured to generate first electromagnetic radiation, which is suitable to cause and/or excite a localized surface plasmon resonance (LSPR) of the nanoparticles, preferably to stimulate a localized resonant oscillation of conduction electrons at the surface of the nanoparticles. Preferably, one or more wavelengths or frequencies of the first electromagnetic radiation match, in particular is or are equal to, one or more wavelengths or frequencies, respectively, of the surface plasmon resonance.

For example, the irradiation unit comprises a laser, preferably a white light laser, or another source, for example a lamp, which is configured to generate the first electromagnetic radiation.

Preferably, the irradiation unit is configured to generate pulsed first electromagnetic radiation. Preferably, the first electromagnetic radiation comprises pulses having a pulse length and a pulse repetition rate, wherein the pulse length and/or the reciprocal value of the pulse repetition rate is shorter, in particular much shorter, than the interaction time of the biomolecules. Alternatively, pulses that are much longer could be used. Alternatively, the irradiation unit may be configured to generate continuous first electromagnetic radiation so as to irradiate the mixture with continuous electromagnetic radiation.

Preferably, the irradiation unit comprises at least one focusing element, for example an objective lens and/or a microscope objective, which is configured to focus the first electromagnetic radiation to the mixture. Preferably, in the case that the irradiation unit comprises a laser, a beam focus, also referred to as "beam waist", of the focused first electromagnetic radiation is positioned or located at a finite distance above or from, respectively, a surface of sample holder or receptacle and/or positioned or located inside the sample holder or receptable away from its walls or surfaces, respectively. Preferably, the "beam waist" is also configured in such a way that on average only a few nanoparticles are hit by it. Because the nanoparticles diffuse out of the laser focus, the duration of irradiation of the particles, and therefore plasmonic heating which is a disadvantage of conventional single plasmonic particle measurements, is limited. In other words: The beam focus is preferably located (deep) inside of the solution. Due to a small focus, only a few nanoparticles are irradiated at a time for only short time periods because they diffuse in and out. In this way, no individual nanoparticle heats up very much and the biomolecular interactions are not perturbed.

According to a preferred embodiment of the apparatus, the detection unit comprises: a beam splitter configured to split the second electromagnetic radiation into a first partial beam and a second partial beam; a path length difference generating unit, in particular a reflecting element mounted on a movable stage, such as a motorized linear stage, configured to provide one or more different path length differences between the first partial beam and the second partial beam, wherein the first partial beam and the second partial beam are allowed to superimpose for each of the path length differences so as to obtain a first interference beam and a second interference beam for each of the path length differences; and two separate detectors, for example single-photon detectors, photon time tagging devices, photomultiplier tubes (PMTs) or Avalanche photodiodes (APDs), which are configured to separately detect the first interference beam and the second interference beam at different times and for each of the path length differences so as to obtain two series of intensity signals representing intensities of the first interference beam and second interference beam, respectively, at the different times and for the different path length differences.

According to an alternatively preferred embodiment of the apparatus, the detection unit comprises: at least one spectral splitting element, preferably a dichroic optical element, in particular a dichroic reflector or mirror or a dichroic filter or a beam splitter with two filters, configured to reflect and/or transmit, respectively, the second electromagnetic radiation so as to obtain at least one first partial beam of electromagnetic radiation having a first spectrum (wavelength(s)) and at least one second partial beam of electromagnetic radiation having a second spectrum (wavelength(s)) which is different from the first spectrum; and two separate detectors, for example single-photon detectors, photon time tagging devices, photomultiplier tubes (PMTs) or Avalanche photodiodes (APDs), which are configured to separately detect the first partial beam and the second partial beam at different times so as to obtain two series of intensity signals representing intensities of the first partial beam and second partial beam, respectively, at the different times and for the first and second spectrum.

Preferably, the at least one spectral splitting element, preferably the dichroic optical element, is configured to reflect and/or transmit the second electromagnetic radiation such that one or more wavelengths or frequencies of the first spectrum and/or of the second spectrum match, in particular is or are equal to, one or more wavelengths or frequencies, respectively, of the surface plasmon resonance.

Further advantages, features and examples of present disclosure will be apparent from the following description of figures showing:

Fig. 1    (a) a schematic representation illustrating an interaction between biomolecules near the surface of a plasmonic nanoparticle and (b) its effect on the scattering cross-section;

Fig. 2    a schematic representation of an example of an apparatus for characterizing transient interactions between biomolecules;

Fig. 3    a) to c) schematic representations of examples of alternative setups of an apparatus for characterizing transient interactions between biomolecules;

Fig. 4    (a) spectral data of a tunable laser and (b) a data analysis (spectral correlation versus time) revealing the timescale of the shifting spectrum;

Fig. 5    a schematic illustrating three stages of data analysis;

Fig. 6    (a) spectral data of a static doublet and (b) a data analysis (spectral correlation versus time);

Fig. 7    (a) spectral data of a dynamic doublet and (b) a data analysis (spectral correlation versus time);

Fig. 8    (a) two state spectra calculated for 50-nm silver nanoparticles with and without a protein (a single layer and two layers of proteins) and (b) a data analysis (spectral correlation versus time);

Fig. 9    a static two-state system where only the intensity change is monitored instead of the spectral correlation. (a) The spectrum used for Monte-Carlo sampling and (b) Time correlations versus time;

Fig. 10   a static two-state system where the photon numbers are analyzed to detect biomolecular dynamics. (a) The spectrum used for Monte-Carlo sampling. (b) Time correlations versus time; and

Fig. 11   another schematic further illustrating preferred aspects of the data analysis.

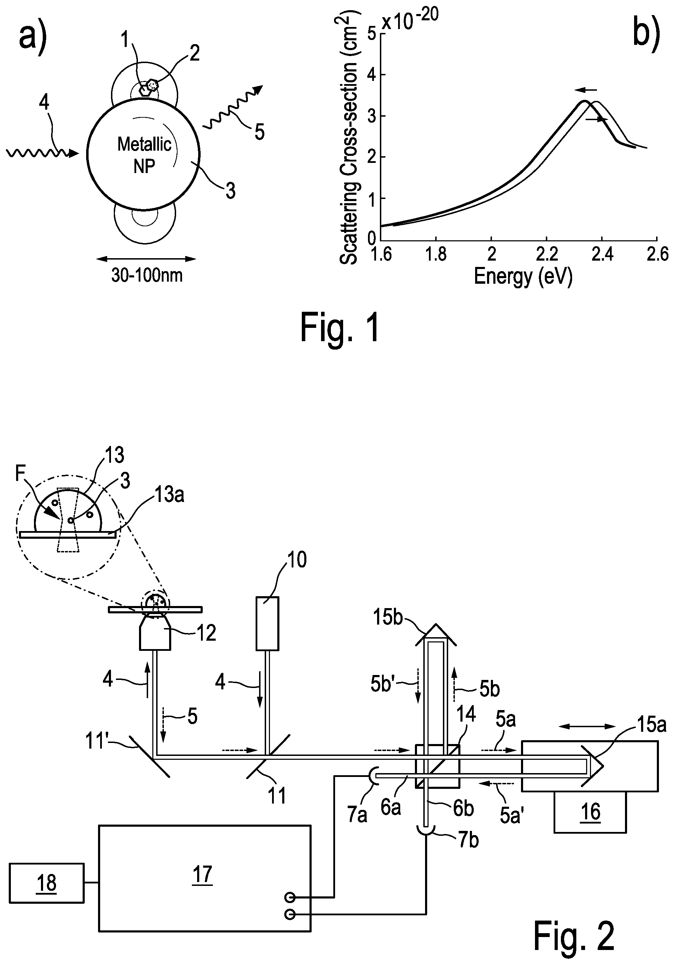

Figure 1 shows (a) a schematic representation exemplarily illustrating an interaction between biomolecules 1, 2 near the surface of a metallic plasmonic nanoparticle 3 and (b) its effect on the scattering cross-section. In the present example, a first biomolecule 1 is already immobilized on or adherent to the surface of the nanoparticle 3 when a second biomolecule 2 interacts with the first biomolecule 1.

The interaction of the biomolecules 1, 2 near the surface of the nanoparticle 3 can be sensed by making use of a localized surface plasmon resonance (LSPR) "hot-spot", wherein a change of the dielectric environment at the hot-spot results in a shift in the energy of the scattering cross-section of the LSPR.

For this purpose, the nanoparticle 3 is irradiated with first electromagnetic radiation 4, and scattered radiation 5, which is also referred to as "second electromagnetic radiation" in the context of the present disclosure, is detected and analyzed, in particular regarding fluctuations and/or shifts in the energy or wavelengths (also referred to as "spectral shifts") contained in the detected second electromagnetic radiation 5.

For detecting the scattered radiation and analyzing spectral shifts, interferometric techniques are particularly preferred because of their high spectral sensitivity. However, also non-interferometric approaches implementing, for example, dichroic reflectors and/or filters, can be used.

Figure 2 shows a schematic representation of an example of an apparatus for characterizing transient interactions between biomolecules. In present example, the apparatus comprises a so-called solution photon-correlation Fourier spectroscopy (S-PCFS) setup, which is based on a photon-correlation interferometry setup (PCFS) which combines confocal microscopy, an interferometer and dual-channel photon-correlation detection. This combination is capable of measuring optical outputs with both high temporal and spectral resolution. For further details regarding PCFS it is referred to Brokmann et al., Photon-correlation Fourier spectroscopy, Optics express, 14(13), 6333-6341 (2006).

In the present example, a radiation source 10, e.g. a laser, in particular a broadband laser, generates first electromagnetic radiation 4 which is directed, for example by means of deflection mirrors 11, 11', towards an objective 12, by which it is focused to a focal point or focal volume or focal region F located within a sample 13 which comprises a mixture, in particular a solution and/or dispersion, contained in or on a sample holder or receptacle 13a, for example a flat or well plate. In present example, the sample 13 is in the form of a droplet provided on a flat plate. As apparent from the figure, the beam focus F, also referred to as "beam waist", of the focused first electromagnetic radiation 4 is located at a finite distance above the surface of the flat plate of the receptacle 13a inside the liquid (droplet).

The mixture preferably contains a plurality of plasmonic nanoparticles (see an exemplary nanoparticle 3 located in the focal region F), first biomolecules, second biomolecules and a suitable solvent and/or dispersing agent, e.g. water or buffer. For example, the mixture can be prepared as follows: Proteins of interest A and B, corresponding to the first and second biomolecules, are purified. Plasmonic nanoparticles are synthesized and coated with an appropriate ligand for adherence to protein A. Preferably, the nanoparticles should be stable (i.e. do not dissolve in the solvent or dispersing agent) and non-aggregated. Preferably, the nanoparticles are diluted, e.g. in a well-plate, to concentrations between 1 pM (picomolar) to 1 $\mu$M (micromolar), preferably 1 to 10 nM (nanomolar).

Protein A is mixed in solution with the nanoparticles first so that they bind or adhere to the nanoparticles. Protein B is added afterwards. Preparing and measuring different concentrations in different wells is preferred, but not necessary. It is also noted that the mixture can be obtained in different other ways. Preferably, the concentrations of the biomolecules, in particular the proteins, is or are higher than the concentration of the nanoparticles to ensure sufficient interactions between the two.

Preferably, the surface of the holder or receptacle 13a, e.g. a glass surface of the flat or well plate, is chosen such that it does not cause nanoparticles or biomolecules to adhere.

Second electromagnetic radiation 5 scattered by the mixture while being irradiated with the first electromagnetic radiation 4 is directed, for example by deflection mirror 11', to a beam splitter 14 which splits the second electromagnetic radiation 5 into a first partial beam 5a and a second partial beam 5b. The first partial beam 5a is reflected by a first retroreflector 15a, which is mounted on a, preferably motorized, movable stage 16 by which different path length differences between the first partial beam 5a and the second partial beam 5b can be generated. The second partial beam 5b is reflected by a second retroreflector 15b so as to superimpose with the reflected first partial beam 5a' at the beam splitter 14. Due to the retroreflectors 15a and 15b, the reflected first partial beam 5a' and reflected second partial beam 5b' have a lateral offset with respect to the first partial beam 5a and second partial beam 5b, respectively. The superposition of the reflected first partial beam 5a' and reflected second partial beam 5b' at the beam splitter 14 (at a location which is laterally offset with respect to the impinging second electromagnetic radiation 5) yields a first interference beam 6a and a second interference beam 6b.

Preferably, the stage 16 is slowly moving or scanning during the acquisition so that the path length difference is changing while the second electromagnetic radiation 5 (strictly speaking: the first interference beam 6a and second interference beam 6b) is being detected. In this way, high spectral resolution can be obtained.

Preferably, the movement of the stage 16 is chosen to be slower, preferably much slower, than the timescale of nanoparticle diffusion through the focal volume of the first electromagnetic radiation 4.

The first interference beam 6a and second interference beam 6b are detected separately over time (i.e. at a plurality of different points in time) by means of two separate detectors 7a, 7b, for example single-photon detectors, PMTs or APDs, for each of the path length differences, whereby two series of intensity signals are obtained which represent the intensities of the first interference beam 6a and second interference beam 6b, respectively, at different times and for the different path length differences.

Preferably, a photon time-tagging device 17 which allows for time-correlated single photon counting is provided which is configured to measure the photon time traces for a period of time, e.g. several seconds, for the different positions of the motorized stage 16, i.e. the path length differences. Using single-photon detectors 7a, 7b and/or the photon time-tagging device 17 enables particularly high temporal resolution. As an alternative to the photon time-tagging device 17, a digital correlator can be used.

A processing unit 18 is provided which is configured to statistically analyze and mathematically translate the detected photon time traces or series of intensity signals, respectively, into time and/or spectral correlations. These findings can be fitted with models of interactions between the biomolecules of interest to extract one or more interaction parameters characterizing the interactions, for example the dissociation constant $K_D$ and/or the transition rates $k_{off}$ and/or $k_{on}$ between a bound to an unbound state and vice versa. This will be described in more detail below.

In summary, the S-PCFS setup according to the present example combines the local environment sensitivity of nanoparticle surface-plasmon resonances with the high temporal and spectral resolution inherent to photon-correlation-based interferometry and allows for measuring diffusing nanoparticles with interacting biomolecules on their periphery in solution without selection bias and, therefore, enables the observation of spectral dynamics, in particular free from diffusion effects, on millisecond or even sub-millisecond time-scales on the plasmonic nanoparticles diffusing in solution.

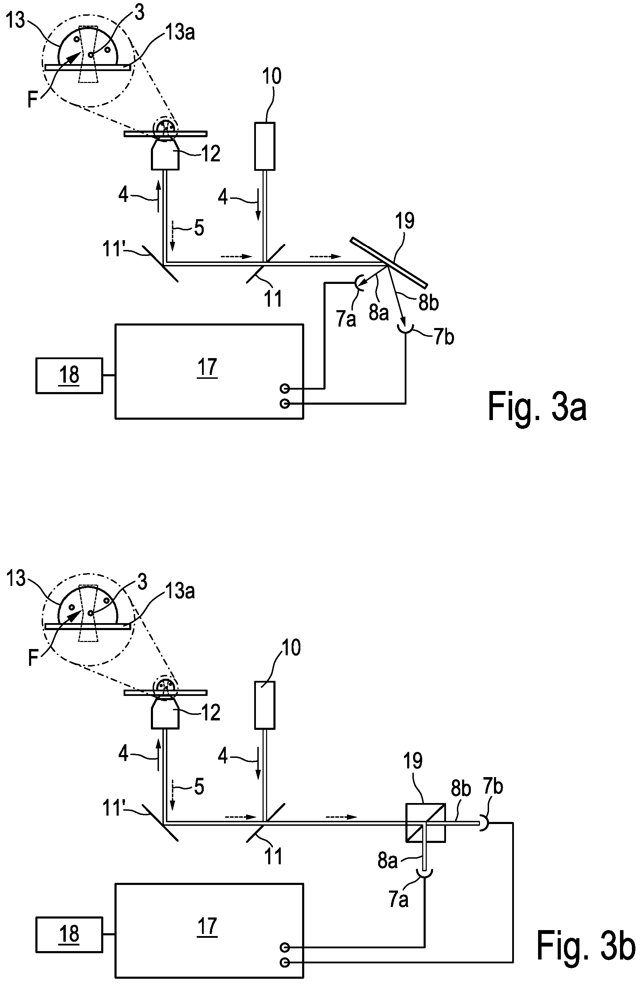

Figure 3a shows a first example of an alternative setup of an apparatus for characterizing transient interactions between biomolecules by implementing the "dual-color method", wherein the interferometer, in particular the beam splitter 14, reflectors 15a, 15b and stage 16, of the apparatus shown in figure 2 has been exchanged for a dichroic mirror 19, which generates two partial beams 8a, 8b of different spectra (i.e. wavelengths or colors) out of the second electromagnetic radiation 5 impinging the dichroic mirror 19 (i.e. first partial beam 8a has a first spectrum or color and second partial beam 8b has a second spectrum or color which is different from the first spectrum).

Preferably, the spectral position of the dichroic mirror 19 is chosen, such that neither of the two output spectra is dominating in intensity in the unbound case, in which only the first biomolecule(s) adhere(s) to the nanoparticle(s) or, respectively, the second biomolecule(s) is/are not bound to and/or interacting with the first biomolecule(s) adherent to the nanoparticle(s).

Similarly to the apparatus shown in figure 2, the two partial beams 8a, 8b are detected separately by separate detectors 7a, 7b over time (i.e. at different time points within a period of time) so as to obtain two series of intensity signals representing intensities of the first partial beam 8a and second partial beam 8b, respectively, at the different times and for the first and second spectrum or color. The change in numbers of photons arriving on each detector 7a, 7b is determined and analyzed preferably by means of a photon time-tagging device 17 and processing unit 18, respectively.

Regarding the other components, in particular radiation source 10, mirrors 11, 11', objective 12 and receptacle 13a, and functionality of the apparatus shown in fig-ure 3, the explanations above regarding the apparatus shown in figure 2 apply accordingly.

As an alternative to the dichroic mirror 19, which advantageously provides a very high signal-to-noise ratio, the dichroic mirror 19 can be replaced by any other spectral splitting element which is configured to isolate intensities on one and the other side of the spectrum, i.e. to provide the two partial beams 8a, 8b of different spectra out of the second electromagnetic radiation 5. For example, the dichroic mirror 19 can be replaced by a beam splitter and two band-pass filters or short- and long-pass combination or by two monochromators.

Figure 3b shows a second example of an alternative setup of an apparatus for characterizing transient interactions between biomolecules by implementing the "dual-color method", wherein a dichroic mirror 19 is not only acting as a spectral splitting element but also as a beam splitting element and, therefore, generates two partial beams 8a, 8b of different spectra (i.e. wavelengths or colors) out of the second electromagnetic radiation 5 impinging the dichroic mirror 19. Regarding the detection of the partial beams 8a, 8a and the other components, in particular radiation source 10, mirrors 11, 11', objective 12 and receptacle 13a, and functionality of the apparatus shown in figure 3b, the explanations above regarding the apparatus shown in figures 2 and 3a apply accordingly.

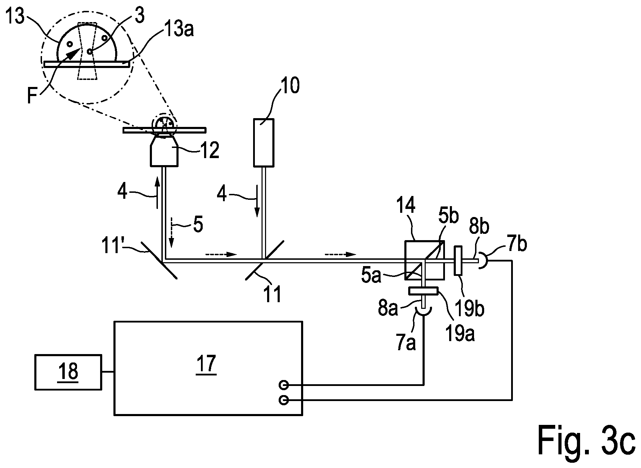

Figure 3c shows a third example of an alternative setup of an apparatus for characterizing transient interactions between biomolecules by implementing the "dual-color method", wherein the dichroic mirror 19 (see Figs. 3a and 3b) has been replaced by a beam splitter 14, which splits the second electromagnetic radiation 5 into a first partial beam 5a and a second partial beam 5b, and two different band-pass filters 19a and 19b, which are configured to transmit different spectra so as to generate two filtered partial beams 8a, 8b of different spectra (i.e. wavelengths or colors) out of the second electromagnetic radiation 5. Regarding the detection of the filtered partial beams 8a, 8b and the other components, in particular radiation source 10, mirrors 11, 11', objective 12 and receptacle 13a, and functionality of the apparatus shown in figure 3c, the explanations above regarding the apparatus shown in figures 2 and 3a apply accordingly.

General considerations

In order to illustrate some basic considerations regarding the relationship between spectral shift and spectral correlation as a function of time, the spectral dynamics for a spectrally shifting laser beam can be examined on a system which does not necessarily require nanoparticles and biomolecules but is rather mimicking a signal similar to sensing biomolecules. In an exemplary setup, a tunable laser is used with a 1 nm broad spectral linewidth. This spectrum is then periodically tuned from 540 nm to 545 nm, with the timescale of tuning expected to be 140 ms. This light is measured using a PCFS setup described above.

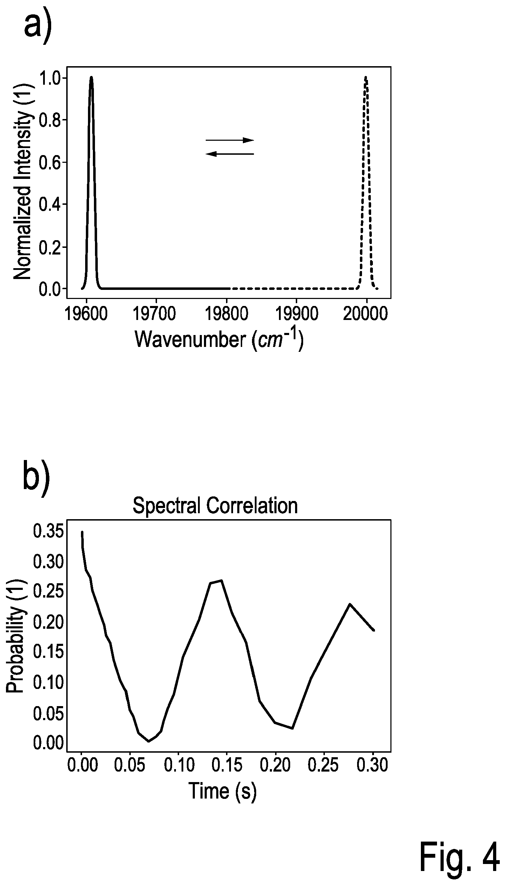

Figure 4 shows (a) the spectral data, i.e. the spectral switching, from the tunable laser which is detected using the PCFS setup and (b) a data analysis which reveals that the spectrum is shifting, i.e. periodically switching, at a timescale of 140 ms, as expected.

Analysis of the Data

Preferably, the data obtained by the setups according to present disclosure are analyzed by looking into the photon time streams, which are also referred to as "intensity signals" or "series of intensity signals". Preferably, the streams are separated into three streams: a "Total stream", "Detector 1 stream", and "Detector 2 stream".

On the Total stream, the time auto-correlation is performed, which reflects the nanoparticle diffusion.

For Detector streams 1 and 2, the time cross-correlation is calculated. This will reveal any spectral dynamics at play, thus also the transient binding behavior. Note however, that this data may still contain particle diffusion dynamics which may also need to be considered. Preferably, this can be corrected with the diffusion dynamics information that is obtained from the Total stream, isolating the biomolecular dynamics of the system.

Preferably, the cross-correlation from A*B and B*A is calculated, wherein A and B correspond to the "Detector 1 stream" and "Detector 2 stream", respectively. Theoretically, these are the same. But because of the use of speed-up algorithms there may occur a slight mismatch between these two. The average/mean of both A*B and B*A then is used as the cross-correlation.

Next, this same analysis is performed for all coarse path-length differences in the measurement, yielding a 3-dimensional data set with path-length difference, time and correlation as axes, wherein the time given along the time axis corresponds to the time lag from the correlation operation. The auto- and cross-correlations as mentioned before are nothing more than sections with fixed path-length difference. However, when a section with fixed time is taken, it is possible to measure the envelope of the interferogram.

Lastly, spectral information can be gained from all of this by Fourier transforming the interferogram to give the spectral correlation. The spectral information can also be presented in 3D, because the interferograms exist as functions of energy (wavelengths) and time. Therefore, the spectral correlation change as a function of time can be seen. These changes can be fit to an exponential decaying function to extract the relevant biomolecular dynamic information. It is noted that, as an alternative to an exponentially decaying function, it can be any function that reflects the underlying dynamics.

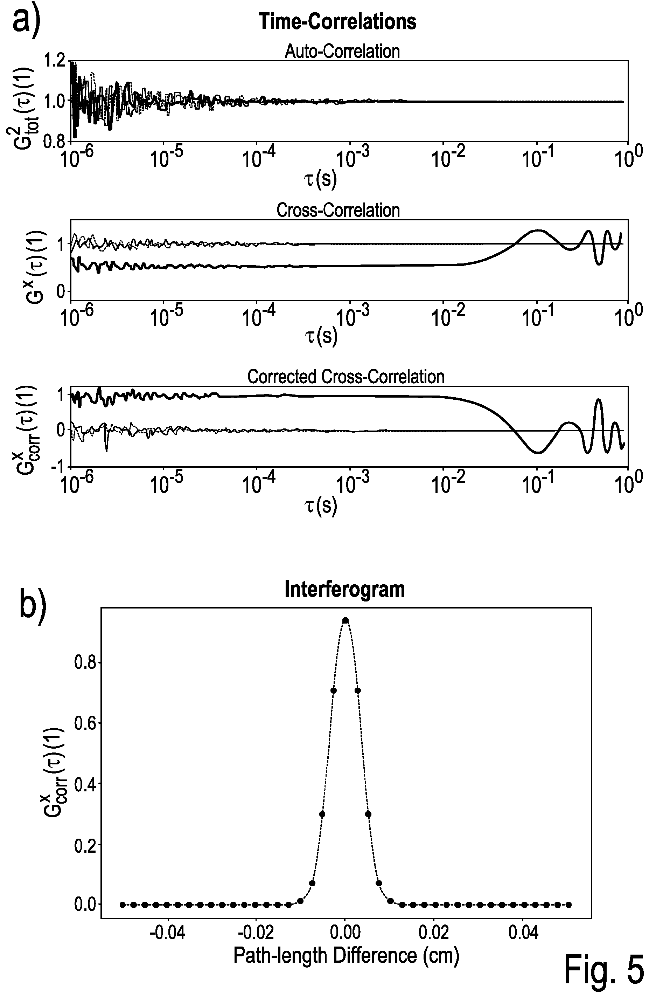

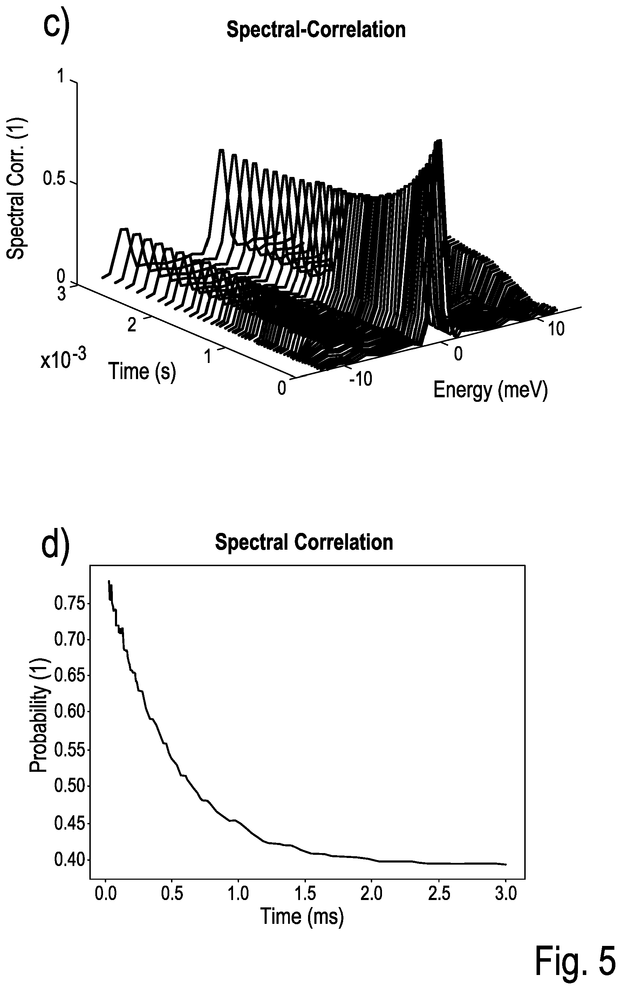

Figure 5 illustrates the three stages of data analysis: (a) Photon streams measured at each interferometer arm position (different colors) are time-correlated. (b) A slice through the 3D dataset for a given time gives the PCFS interferogram. (c) The Fourier transform of the interferogram yields the spectral correlation. (d) Analysis of the temporal change of the spectral correlation reveals biomolecular dynamics.

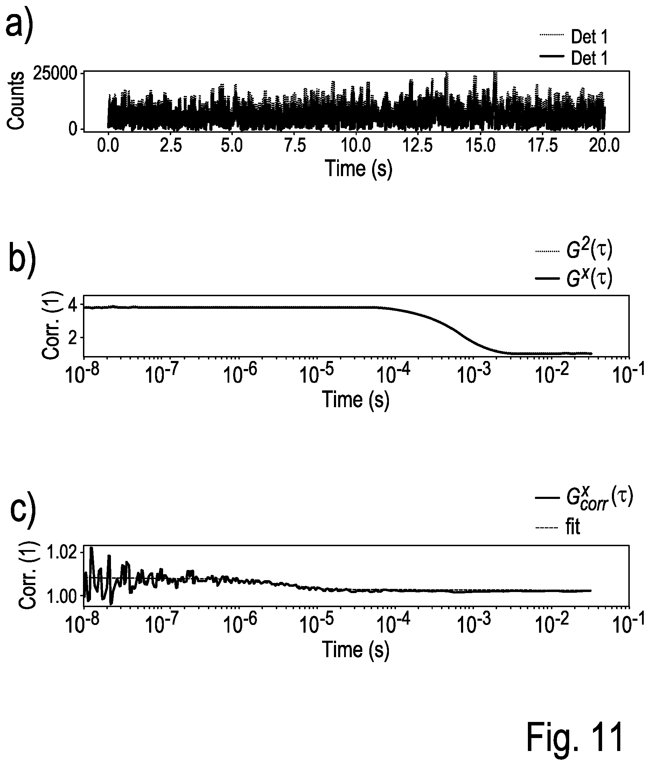

Further details and explanation of the preferably performed data analysis is given below with reference to Figure 11, which illustrates more realistic simulation taking into account nanoparticle diffusion and nanoparticle optical properties.

Computational Model

Preferably, biomolecular interactions occurring in the proximity of the sensing nanoparticles can be simulated by means of a computational model. A simple binary interaction can be described by a two-state model, where the biomolecules are either attached or detached with forward and backwards rates dictating the timescale of change.

$$A + B \rightleftharpoons A \cdot B$$

A simulation can mimic this system by defining two distinct peaks in the spectrum, one corresponding to the "on state" and the other to the "off state". Next, time dynamics is instituted by performing Monte Carlo sampling from either peak of the spectrum while reflecting the typical time dynamics of the interaction.

Static Doublet

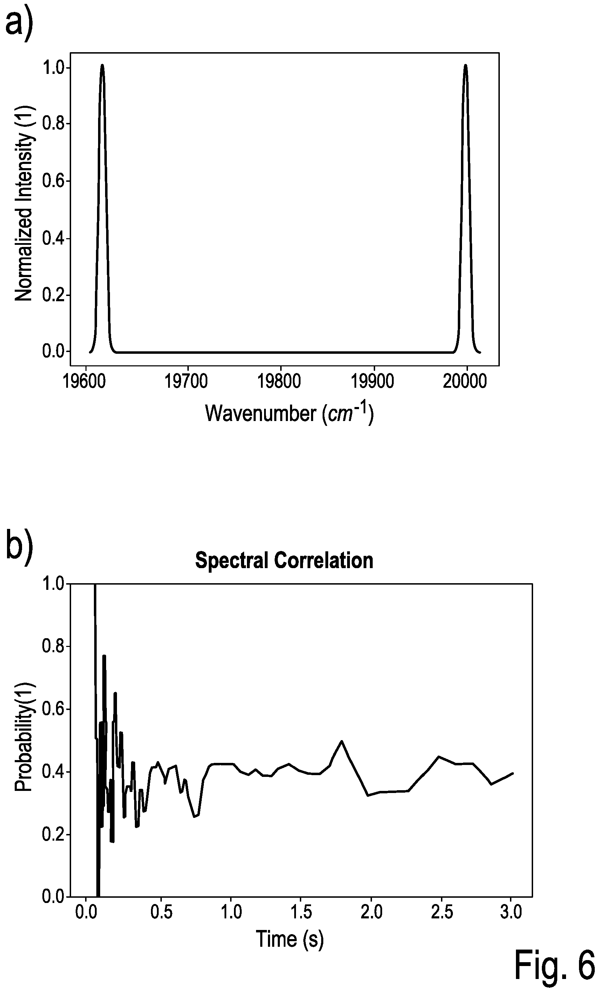

As a first check, a sample is considered with the two states existing in equal proportion and static across all timescales, and thus showing no time dynamics. The spectrum with two states, used in the simulation, is shown in Figure 6a. The resulting spectral correlation from the simulated measurement shows no change with time, as seen by the nearly flat line in Figure 6b. As illustrated in figure 6, (a) a two-state system without any time dynamics can be modeled as two static spectral lines, and (b) an analysis of the spectral correlation shows no time dynamics present in the system, as expected.

Dynamic Doublet

Next, a similar model system can be analyzed, but this time including dynamics. In this simulation, photons coming from either one of the two distinct peaks are sampled as a function of time. The timescale of transition is dictated by the rate **constants** $k_{on}$ and $k_{off}$. When the rate equation is solved, it can be shown that there is an exponentially decaying probability of switching between the two states. A measurement can easily measure this exponential decay, and after fitting, it can be retrieved that, as expected, the typical transition time is governed by the sum of $k_{on}$ and $k_{off}$. In this case, $k_{on}$ and $k_{off}$ are both set to $1 \cdot 10^5 \, s^{-1}$, and from the fit, $2.04 \cdot 10^5 \, s^{-1}$ is retrieved for their sum. Additionally, the long-timescale asymptotic value is governed by $K_d$ in the form of $\frac{1+K_d^2}{(1+K_d)^2}$ . From a single measurement, it may not always be possible to uniquely determine $k_{on}$, $k_{off}$, and $K_d$. Therefore, it is preferred to provide a concentration series (i.e. at least two mixtures having different concentrations of biomolecules) which will enable the quantification of both rates and the dissociation constant for transient biomolecular dynamics even on sub-millisecond timescales. Preferably, nanoparticle concentration stays the same.

The method and apparatus according to present disclosure are limited in time resolution by the signal-to-noise ratio that can be obtained at increasingly shorter timescales. Unlike in fluorescence, however, the obtainable signal-to-noise ratios can potentially be much higher at fast timescales because of the number of photons generated by the inherently fast scattering processing of localized surface plasmon resonances. In this case, the temporal resolution is limited by the resolution of the single-photon detectors and the hardware correlator, i.e. the photon time-tagging device 17, which is on the order of nanoseconds. This provides sensitivity to even the fastest of biomolecular interactions.

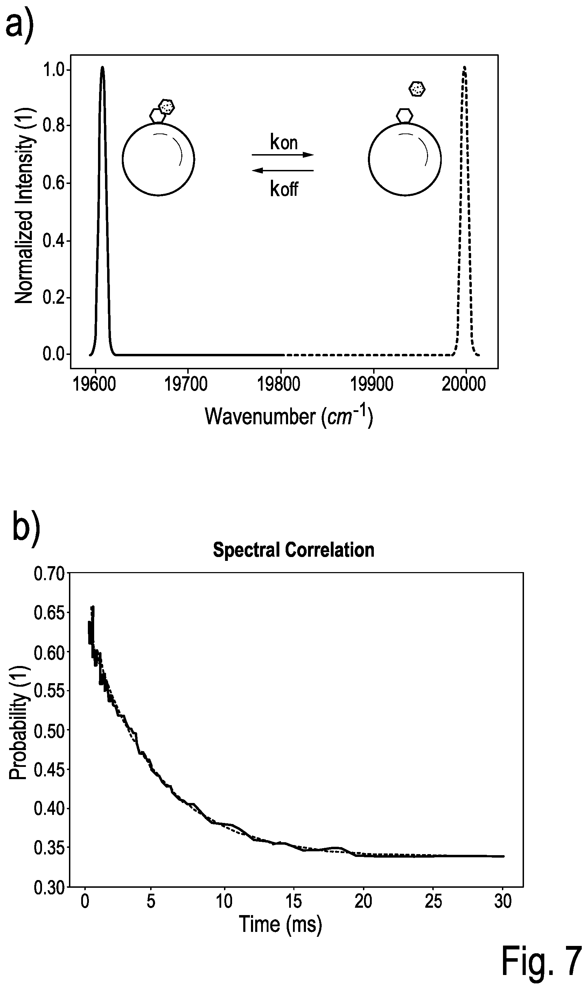

As illustrated in figure 7, (a) for a dynamic two-state system, photons coming from either one of the two distinct peaks, representing two different states, are sampled as a function of time. This timescale is dictated by the rates $k_{on}$ and $k_{off}$. (b) The spectral correlation shows the expected timescale of the switching between the two states.

Dynamic Doublet considering Plasmonic Particles with Proteins

The previous results show that even the fastest-timescale dynamics for a biomolecular state-switching system are measurable with the setup according to present disclosure.

Considering that these results were obtained on a very simplistic model with arbitrarily defined spectra to reflect the sensitivity of the nanoparticles, the model is preferably refined by considering more "realistic" values based on electromagnetic simulations of the optical response of spherical nanoparticles.

It is noted that spheres are not the only nanoparticles that can be used. Other nanoparticle shapes can also be used and some preferred.

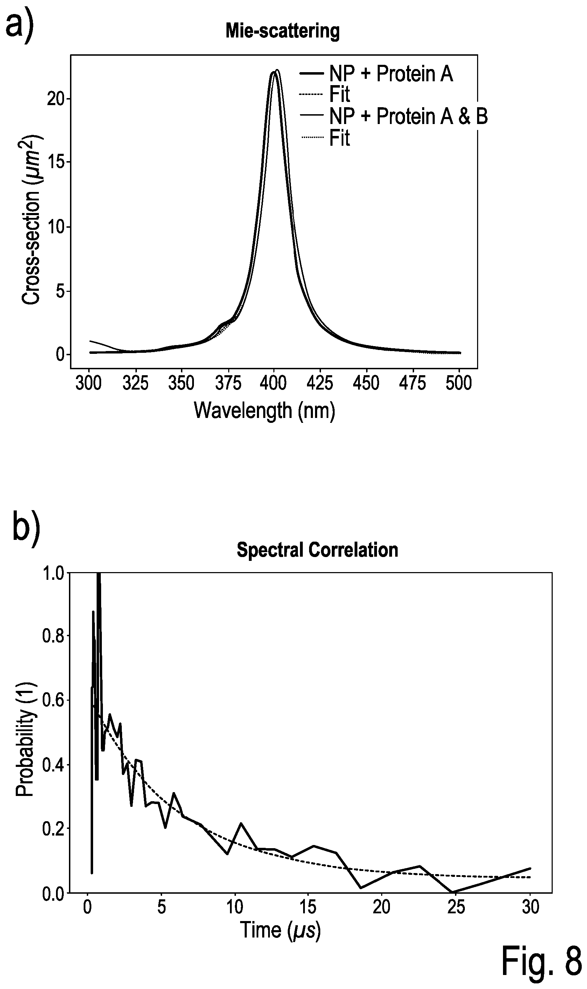

Figure 8 (a) shows two extinction spectra for silver spheres with diameter 50 nm calculated using the electromagnetic "Mie theory". To mimic sensing, in a first state one particle is surrounded by a first protein layer of 4 nm , while a second state consists of a particle surrounded by two layers of proteins forming a 8 nm shell around it, with switching occurring at the same transition rates as in Figure 7. From this simplistic system, the expected timescales of the dynamics of this system can still be easily extract (Figure 8 (b)). From the fit, $1.6 \cdot 10^5$ $s^{-1}$ for the sum of $k_{on}$ and $k_{off}$ is retrieved. The slight deviation from the expected value comes from the deviation in the fit, which can be attributed to noise in the signal from the limited number of photons that we simulated for computational speed.

Preferred Adaptations to the S-PCFS Method

The method and apparatus described above can be adapted, for example, in order to reduce the duration of the measurement, which is typically on the timescale of tens of minutes, in order to enable measuring many different samples in an acceptable time. Approaches intended to overcome these limitations are described as follows.

Single-point PCFS

This preferred embodiment does not rely on resolving a complete interferogram as is the case with PCFS. Here, one point of the interferogram is chosen, where contrast due to dynamics (potentially highest on the steepest part of the interferogram) is expected. This time, the contrast change of the interferogram is measured rather than the spectral change.

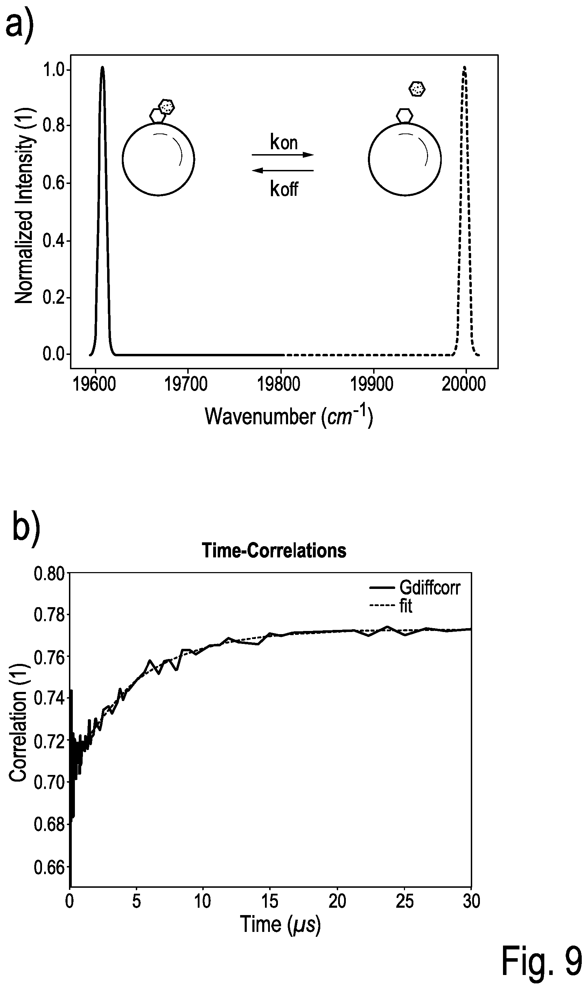

Figure 9 illustrates a static two-state system where only the interferometric change is monitored instead of the spectral correlation, wherein a) shows the spectrum used for Monte-Carlo sampling and b) the interferometric change showing the same system dynamics as in Figure 7. As apparent from Figure 9, it is possible to extract the same dynamics from the same system as in Figure 7. From the fit, $2.03 \cdot 10^5$ $s^{-1}$ for the sum of $k_{on}$ and $k_{off}$ can be retrieved, as expected.

Fixed-point interferometry

This preferred embodiment is relatively similar to the single point PCFS. However, in this method interferometric contrast over one static point in the interferogram is analyzed. This method is more similar to traditional Fourier spectroscopy than to PCFS. The advantage of this method is that it not only shows interferometric contrast, but also shows effects from the fringes in the interferogram, opening up to measurement of the absolute wavelength of the spectrum.

Dual-color method

This preferred approach, which is already described above with reference to fig-ure 3, does not rely on any interferometric effects. Here, the interferometer is exchanged with a dichroic mirror positioned in between the middle of the two states. In this case, the change in numbers of photons arriving on either detector has to be computed. This number then reflects biomolecular dynamics. From the fit, $2.26 \cdot 10^5$ $s^{-1}$ for the sum of $k_{on}$ and $k_{off}$ can be retrieved.

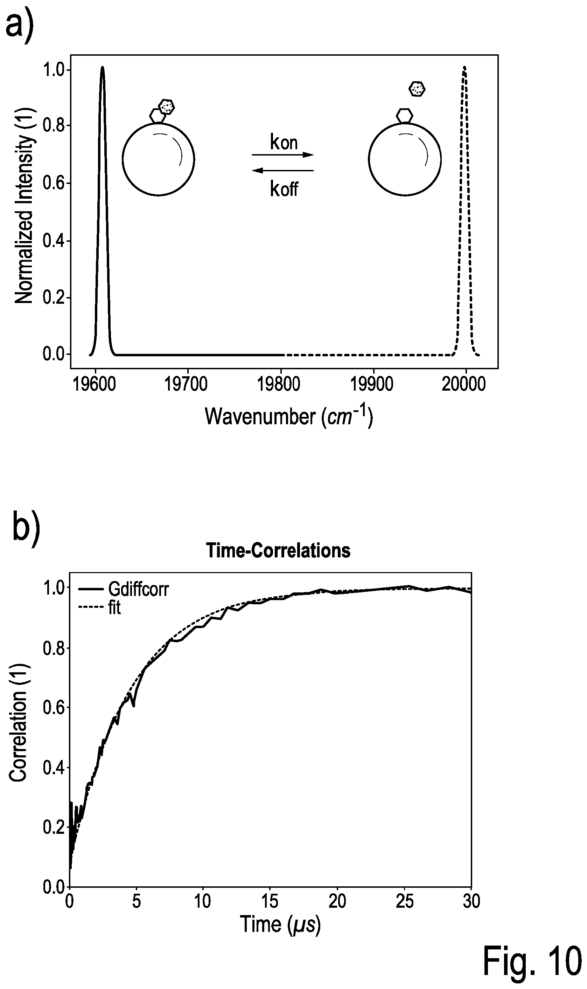

Figure 10 illustrates a static two-state system where the photon numbers are analyzed to detect biomolecular dynamics. a) The spectrum used for Monte-Carlo sampling. b) The biomolecular dynamics can be extracted from photon counting analysis.

Figure 11 shows a schematic to further illustrate a preferably performed data analysis of nanoparticle scattering spectra switching between two states. In short, fig-ure 11 a) shows the time trace signal as measured on the two detectors "Det 1" and "Det 2" (see, e.g. detectors 7a and 7b in Figures 2 and 3a to 3c). For inspection, the TCSPC/Time-tagged data has been binned into equal time containers. Figure 11 b) shows the computed auto- and cross-correlations, $g^2(\tau)$ and $g^\times(\tau)$, respectively. Figure 11 c) shows the corrected cross-correlation which is computed from $g^2(\tau)$ and $g^\times(\tau)$. By means of fitting (see "fit"), the relevant interaction parameters ($k_{on}$, $k_{off}$, $K_D$) can be extracted.

More specifically, the data analyzed comes from the photon counts registered on both detectors. Preferably, these counts are time-tagged data, but do not necessarily have to be. The data from the two detectors can be separated into three photon streams: Detector 1 stream, Detector 2 stream, and the Total (Det 1 + Det 2) stream. First, a time auto-correlation $g^2(\tau)$ is computed from the total photon stream. The resulting curve reflects the nanoparticle/sensor diffusion. Then, time cross-correlations $g^\times(\tau)$ are computed for both detector stream 1 and 2. Finally, both curves are averaged together via (

$$g^\times(\tau) = (g^\times_{Det\,1}(\tau) + g^\times_{Det\,1}(\tau))/2$$ ), because

they should output approximately the same signal. This time cross-correlation gives insight into any spectral dynamics at play, or in other words, transient binding events around the sensor. Note however, that the cross-correlation still contains particle diffusion dynamics. Therefore, the cross-correlation is preferably corrected with the time auto-correlation of the total stream, thereby isolating the nanoparticle sensing dynamics of the system:

$$g^\times_{corr}(\tau) = -2(g^\times(\tau)/g^2(\tau) - 1) + 1$$

The above-mentioned formula shows that the correction is made by dividing out the time auto-correlation of the total stream. The additional factors are needed for proper scaling.

Figure 11 illustrates the working principle of this analysis based on simulated data coming from diffusing nanoparticles, having a spectrum that switches between two states with $k_{on} = k_{off} = 1 \cdot 10^5$ $s^{-1}$. In Figure 11 a), the obtained time-tagged data from the two detectors is shown as time-binned histograms. This is merely to visualize what the detected signal looks like. Figure 11 b) shows the computed time auto-correlation of the total stream and the average time cross-correlation of detector 1 and detector 2. Lastly, Figure 11 c) shows the corrected cross-correlation, $g_{corr}^{\times}(\tau)$, following the equation above. Here, it can be observed that in the corrected cross-correlation, the spectral dynamics have been isolated, and nanoparticle diffusion dynamics have been removed completely. Therefore, by fitting this corrected curve with an exponential function, the desired interactions parameters $k_{on}$, $k_{off}$ and $K_D$ can be extracted. In present example, $k_{on} = 1.08 \cdot 10^5\ s^{-1}$, $k_{off} = 1.08 \cdot 10^5\ s^{-1}$, and $K_D = 1/2$ is retrieved.

**Claims**

1. A method for characterizing transient interactions between biomolecules (1, 2) comprising following steps:

   - providing a plurality of plasmonic nanoparticles (3) which are configured to allow first biomolecules (1) to adhere thereto,
   - providing a mixture comprising the nanoparticles (3), first biomolecules (1) and second biomolecules (2) to allow the first biomolecules (1) to adhere to the nanoparticles (3) and to allow the second biomolecules (2) to transiently interact with the first biomolecules (1) adherent to the nanoparticles (3),
   - irradiating the mixture with first electromagnetic radiation (4),
   - detecting second electromagnetic radiation (5), which is scattered by the mixture while irradiating the mixture with the first electromagnetic radiation (4), in a time-resolved and spectrally-resolved manner so as to obtain intensity signals representing changes in the spectrum of the detected second electromagnetic radiation (5), and
   - determining at least one interaction parameter, such as $k_{on}$, $k_{off}$ or $k_D$, characterizing transient interactions of the second biomolecules (2) with the first biomolecules (1) based on the intensity signals,

   **characterized in that** the step of detecting the second electromagnetic radiation comprises

   - splitting the second electromagnetic radiation into a first partial beam and a second partial beam, providing one or more different path length differences (δ) between the first partial beam and the second partial beam, superimposing the first partial beam and the second partial beam for each of the path length differences (δ) so as to obtain a first interference beam and a second interference beam for each of the path length differences (δ), and separately detecting the first interference beam and the second interference beam by means of two separate detectors at different times and for each of the path length differences (δ) so as to obtain two series of intensity signals representing intensities of the first interference beam and second interference beam, respectively, at the different times and for the different path length differences (δ), or
   - applying the second electromagnetic radiation to at least one spectral splitting element (19; 14, 19a, 19b), in particular a dichroic optical element (19), so as to obtain at least one first partial beam of electromagnetic radiation having a first spectrum and at least one second partial beam of electromagnetic radiation having a second spectrum which is different from the first spectrum, and separately detecting the first partial beam and the second partial beam by means of two separate detectors at different times so as to obtain two series of intensity signals representing intensities of the first partial beam and second partial beam, respectively, at the different times and for the first and second spectrum.

2. The method according to claim 1 further comprising determining at least one time auto-correlation function (intensity-time auto-correlation function) characterizing a time auto-correlation of a combination of the two series of intensity signals, wherein at least one diffusion parameter characterizing a diffusion of the nanoparticles in the mixture is determined based on the at least one time auto-correlation function.

3. The method according to claim 1 or 2 further comprising determining at least one time cross-correlation function (intensity-time cross-correlation function) characterizing a time cross-correlation between the two series of intensity signals, wherein the at least one interaction parameter is determined based on the at least one time cross-correlation function and optionally also on the at least one time auto-correlation function.

4. The method according to claim 2 or 3, wherein the at least one time auto-correlation function and/or the at least one time cross-correlation function is determined for the different path length differences (δ) between the first partial beam and the second partial beam or for the first and second spectrum, respectively.

5. The method according to any one of the claims 2 to 4, wherein the time auto-correlation function (intensity-time auto-correlation function) is used to correct the time cross-correlation function (intensity-time cross-correlation function) to remove effects of nanoparticle diffusion on the time cross-correlation function.

**6.** The method according to claim 5, wherein the at least one interaction parameter is determined based, in particular based only, on the corrected intensity cross-correlation function.

**7.** The method according to any one of the claims 3 to 6 further comprising Fourier transforming the time cross-correlation functions, which are determined for the different path length differences, with respect to the dimension of the path length differences so as to obtain spectral correlation functions (spectral-time correlation function) at different times and for different wavelength changes, wherein the at least one interaction parameter is determined based on the spectral correlation functions.

**8.** The method according to claim 7 further comprising determining a temporal behavior of the spectral correlation functions, wherein the at least one interaction parameter is determined based on the temporal behavior of the spectral correlation functions and/or intensity correlation functions.

**9.** The method according to any one of the preceding claims, wherein determining the at least one interaction parameter , such as $k_{on}$, $k_{off}$ or $k_D$, includes determining at least one parameter characterizing reversible interactions between the first and second biomolecules (1, 2).

**10.** The method according to any one of the preceding claims, wherein determining the at least one interaction parameter , such as $k_{on}$, $k_{off}$ or $k_D$, includes determining at least one of the following:

- a first transition rate , $k_{on}$, characterizing a time rate at which transitions occur between an unbound state, in which the second biomolecules (2) are not bound to and/or do not interact with first biomolecules (1), to a bound state, in which the second biomolecules (2) are bound to and/or interact with the first biomolecules (1), and/or
- a second transition rate , $k_{off}$, characterizing a time rate at which transitions occur between a bound state, in which the second biomolecules (2) are bound to and/or interact with the first biomolecules (1), to an unbound state, in which the second biomolecules (2) are not bound to and/or do not interact with the first biomolecules (1), and/or
- a dissociation constant , $k_D$, characterizing a tendency of the first and second biomolecules (1, 2) to reversibly dissociate between a bound state, in which the second biomolecules (2) are bound to and/or interact with the first biomolecules (1), and an unbound state, in which the second biomolecules (2) are not bound to and/or do not interact with the first biomolecules (1).

**11.** The method according to any one of the preceding claims, wherein the mixture comprising the nanoparticles (3), first biomolecules (1) and second biomolecules (2) is a solution and/or dispersion, wherein the nanoparticles (3), first biomolecules (1) and second biomolecules (2) are dissolved in a solvent or dispersed in a dispersion agent, respectively.

**12.** An apparatus for characterizing transient interactions between biomolecules (1,2) comprising:

- a receptacle (13a) configured to receive a mixture comprising first biomolecules (1), second biomolecules (2) and a plurality of plasmonic nanoparticles (3) which are configured to allow at least a part of the first biomolecules (1) to adhere thereto, wherein at least a part of the second biomolecules (2) are allowed to transiently interact with first biomolecules (1) adherent to the nanoparticles (3),
- an irradiation unit (10) configured to irradiate the mixture with first electromagnetic radiation (4),
- a detection unit (7a, 7b, 14 - 17, 19, 19a, 19b) configured to detect second electromagnetic radiation (5), which is scattered by the mixture while being irradiated with the first electromagnetic radiation (4), in a time-resolved and spectrally-resolved manner so as to obtain intensity signals representing changes in the spectrum of the detected second electromagnetic radiation (5), and
- a processing unit (18) configured to determine at least one interaction parameter , such as $k_{on}$, $k_{off}$ or $k_D$, characterizing transient interactions of the second biomolecules (2) with the first biomolecules (1) based on the intensity signals,

**characterized in that** the detection unit comprises:

- a beam splitter (14) configured to split the second electromagnetic radiation (5) into a first partial beam (5a) and a second partial beam (5b), a path length difference generating unit (15a, 15b, 16) configured to provide one or more different path length differences between the first partial beam (5a, 5a') and the second partial beam (5b, 5b'), wherein the first partial beam (5a') and the second partial beam (5b') are allowed to superimpose for each of the path length differences so as to obtain a first interference beam (6a) and a second interference beam (6b) for each of the path length differences, and two separate detectors (7a, 7b) which are configured to separately detect the first interference beam (6a) and the second interference beam (6b) at different times and for each of the path length differences so as to obtain two series of intensity signals representing intensities of the first interference beam (6a) and second interference beam (6b), respectively, at the different times and for the different path length differences, or
- at least one spectral splitting element (19; 14, 19a, 19b), in particular a dichroic optical element (19), configured to reflect and/or transmit the second electromagnetic radiation (5) so as to obtain at least one first partial beam (8a) of electromagnetic radiation having a first spectrum and at least one second partial beam (8b) of electromagnetic radiation having a second spectrum which is different from the first spectrum, and two separate detectors (7a, 7b) which are configured to separately detect the first partial beam (8a) and the second partial beam (8b) at different times so as to obtain two series of intensity signals representing intensities of the first partial beam (8a) and second partial beam (8b), respectively, at the different times and for the first and second spectrum.

13. The apparatus according to claim 12, wherein the first electromagnetic radiation (4) is configured to cause and/or excite a surface plasmon resonance of the nanoparticles (3), in particular one or more wavelengths or energies of the first electromagnetic radiation (4) match one or more wavelengths or energies, respectively, of the surface plasmon resonance.

14. The apparatus according to claim 12 or 13, wherein the at least one spectral splitting element (19; 14, 19a, 19b), in particular the dichroic optical element (19), is configured to reflect and/or transmit the second electromagnetic radiation (5) such that one or more wavelengths or frequencies of the first spectrum and/or of the second spectrum match one or more wavelengths or energies, respectively, of the surface plasmon resonance.

15. A system for characterizing transient interactions between biomolecules (1, 2), the system comprising the apparatus according to any one of the claims 12 to 14 and

- a plurality of plasmonic nanoparticles (3) which are configured to allow first biomolecules (1) to adhere thereto and/or
- a mixture comprising a plurality of plasmonic nanoparticles (3), which are configured to allow first biomolecules (1) to adhere thereto, first biomolecules (1) and second biomolecules (2).

**Patentansprüche**

1. Verfahren zur Charakterisierung vorübergehender Wechselwirkungen zwischen Biomolekülen (1, 2), das folgende Schritte aufweist:

- Bereitstellen einer Vielzahl von plasmonischen Nanopartikeln (3), die so konfiguriert sind, dass erste Biomoleküle (1) daran haften können,
- Bereitstellen einer Mischung, die die Nanopartikel (3), erste Biomoleküle (1) und zweite Biomoleküle (2) aufweist, um zu ermöglichen, dass die ersten Biomoleküle (1) an den Nanopartikeln (3) haften und zu ermöglichen, dass die zweiten Biomoleküle (2) vorübergehend mit den ersten Biomolekülen (1) interagieren, die an den Nanopartikeln (3) haften,
- Bestrahlen der Mischung mit einer ersten elektromagnetischen Strahlung (4),
- Erfassen einer zweiten elektromagnetischen Strahlung (5), die von der Mischung gestreut wird, während die Mischung mit der ersten elektromagnetischen Strahlung (4) bestrahlt wird, in einer zeitaufgelösten und spektral aufgelösten Weise, um Intensitätssignale zu erhalten, die Änderungen im Spektrum der erfassten zweiten elektromagnetischen Strahlung (5) repräsentieren, und
- Bestimmen mindestens eines Wechselwirkungsparameters, wie beispielsweise $k_{on}$, $k_{off}$ oder $K_D$, der vorübergehende Wechselwirkungen der zweiten Biomoleküle (2) mit den ersten Biomolekülen (1) charakterisiert, basierend auf den Intensitätssignalen,

**dadurch gekennzeichnet, dass** der Schritt des Erfassens der zweiten elektromagnetischen Strahlung aufweist:

- Aufteilen der zweiten elektromagnetischen Strahlung in einen ersten Teilstrahl und einen zweiten Teilstrahl, Bereitstellen einer oder mehrerer unterschiedlicher Weglängendifferenzen ($\delta$) zwischen dem ersten Teilstrahl und dem zweiten Teilstrahl, Überlagern des ersten Teilstrahls und des zweiten Teilstrahls für jede der Weglängendifferenzen ($\delta$), um einen ersten Interferenzstrahl und einen zweiten Interferenzstrahl für jede der Weglängendifferenzen ($\delta$) zu erhalten, und getrenntes Erfassen des ersten Interferenzstrahls und des zweiten Interferenzstrahls mittels zweier separater Detektoren zu unterschiedlichen Zeitpunkten und für jede der Weglängendifferenzen ($\delta$), um zwei Reihen von Intensitätssignalen zu erhalten, die die Intensitäten des ersten Interferenzstrahls bzw. des zweiten Interferenzstrahls zu den unterschiedlichen Zeitpunkten und für die unter-

schiedlichen Weglängendifferenzen ($\delta$) repräsentieren, oder

- Anwenden der zweiten elektromagnetischen Strahlung auf mindestens ein Spektralteilungselement (19; 14, 19a, 19b), insbesondere ein dichroitisches optisches Element (19), um mindestens einen ersten Teilstrahl elektromagnetischer Strahlung mit einem ersten Spektrum und mindestens einen zweiten Teilstrahl elektromagnetischer Strahlung mit einem zweiten Spektrum zu erhalten, das sich vom ersten Spektrum unterscheidet, und getrenntes Erfassen des ersten Teilstrahls und des zweiten Teilstrahls mittels zweier getrennter Detektoren zu unterschiedlichen Zeitpunkten, um zwei Reihen von Intensitätssignalen zu erhalten, die die Intensitäten des ersten Teilstrahls bzw. des zweiten Teilstrahls zu den unterschiedlichen Zeitpunkten und für das erste und zweite Spektrum repräsentieren.

2. Verfahren nach Anspruch 1, ferner aufweisend ein Bestimmen mindestens einer Zeit-Autokorrelationsfunktion (Intensitäts-Zeit-Autokorrelationsfunktion), die eine Zeit-Autokorrelation einer Kombination der beiden Reihen von Intensitätssignalen charakterisiert, wobei mindestens ein Diffusionsparameter, der eine Diffusion der Nanopartikel in der Mischung charakterisiert, auf der Grundlage der mindestens einen Zeit-Autokorrelationsfunktion bestimmt wird.

3. Verfahren nach Anspruch 1 oder 2, ferner aufweisend ein Bestimmen mindestens einer Zeit-Kreuzkorrelationsfunktion (Intensitäts-Zeit-Kreuzkorrelationsfunktion), die eine Zeit-Kreuzkorrelation zwischen den beiden Reihen von Intensitätssignalen charakterisiert, wobei der mindestens eine Wechselwirkungsparameter auf der Grundlage der mindestens einen Zeit-Kreuzkorrelationsfunktion und optional auch auf der Grundlage der mindestens einen Zeit-Autokorrelationsfunktion bestimmt wird.

4. Verfahren nach Anspruch 2 oder 3, wobei die mindestens eine Zeit-Autokorrelationsfunktion und/oder die mindestens eine Zeit-Kreuzkorrelationsfunktion für die unterschiedlichen Weglängendifferenzen ($\delta$) zwischen dem ersten Teilstrahl und dem zweiten Teilstrahl bzw. für das erste und zweite Spektrum bestimmt wird.

5. Verfahren nach einem der Ansprüche 2 bis 4, wobei die Zeit-Autokorrelationsfunktion (Intensitäts-Zeit-Autokorrelationsfunktion) verwendet wird, um die Zeit-Kreuzkorrelationsfunktion (Intensitäts-Zeit-Kreuzkorrelationsfunktion) zu korrigieren, um Effekte der Nanopartikel-Diffusion auf die Zeit-Kreuzkorrelationsfunktion zu entfernen.

6. Verfahren nach Anspruch 5, wobei der mindestens eine Wechselwirkungsparameter auf der Grundlage, insbesondere nur auf der Grundlage, der korrigierten Intensitäts-Kreuzkorrelationsfunktion bestimmt wird.

7. Verfahren nach einem der Ansprüche 3 bis 6, ferner aufweisend ein Fourier-Transformieren der Zeit-Kreuzkorrelationsfunktionen, die für die verschiedenen Weglängendifferenzen bestimmt werden, in Bezug auf die Dimension der Weglängendifferenzen, um Spektralkorrelationsfunktionen (Spektral-Zeit-Korrelationsfunktion) zu verschiedenen Zeiten und für verschiedene Wellenlängenänderungen zu erhalten, wobei der mindestens eine Wechselwirkungsparameter auf der Grundlage der Spektralkorrelationsfunktionen bestimmt wird.

8. Verfahren nach Anspruch 7, ferner aufweisend ein Bestimmen eines zeitlichen Verhaltens der spektralen Korrelationsfunktionen, wobei der mindestens eine Wechselwirkungsparameter auf der Grundlage des zeitlichen Verhaltens der spektralen Korrelationsfunktionen und/oder Intensitätskorrelationsfunktionen bestimmt wird.

9. Verfahren nach einem der vorstehenden Ansprüche, wobei das Bestimmen des mindestens einen Wechselwirkungsparameters, wie $k_{on}$, $k_{off}$ oder $K_D$, das Bestimmen mindestens eines Parameters aufweist, der reversible Wechselwirkungen zwischen dem ersten und dem zweiten Biomolekül (1, 2) charakterisiert.

10. Verfahren nach einem der vorstehenden Ansprüche, wobei das Bestimmen des mindestens einen Wechselwirkungsparameters, wie $k_{on}$, $k_{off}$ oder $K_D$, das Bestimmen mindestens eines der folgenden aufweist:

- eine erste Übergangsrate, $k_{on}$, die eine Zeitrate charakterisiert, mit der Übergänge zwischen einem ungebundenen Zustand, in dem die zweiten Biomoleküle (2) nicht an die ersten Biomoleküle (1) gebunden sind und/oder mit diesen nicht interagieren, zu einem gebundenen Zustand, in dem die zweiten Biomoleküle (2) an die ersten Biomoleküle (1) gebunden sind und/oder mit diesen interagieren, stattfinden, und/oder

- eine zweite Übergangsrate, $k_{off}$, die eine Zeitrate charakterisiert, mit der Übergänge zwischen einem gebundenen Zustand, in dem die zweiten Biomoleküle (2) an die ersten Biomoleküle (1) gebunden sind und/oder mit diesen interagieren, zu einem ungebundenen Zustand, in dem die zweiten Biomoleküle (2) nicht an die ersten Biomoleküle (1) gebunden sind und/oder nicht mit diesen interagieren, stattfinden, und/oder
- eine Dissoziationskonstante $K_D$, die eine Tendenz der ersten und zweiten Biomoleküle (1, 2) charakterisiert, reversibel zwischen einem gebundenen Zustand, in dem die zweiten Biomoleküle (2) an die ersten Biomoleküle (1) gebunden sind und/oder mit diesen interagieren, und einem ungebundenen Zustand, in dem die zweiten Biomoleküle (2) nicht an die ersten Biomoleküle (1) gebunden sind und/oder nicht mit diesen interagieren, zu dissoziieren.

11. Verfahren nach einem der vorstehenden Ansprüche, wobei die Mischung, die die Nanopartikel (3), ersten Biomoleküle (1) und zweiten Biomoleküle (2) aufweist, eine Lösung und/oder Dispersion ist, wobei die Nanopartikel (3), ersten Biomoleküle (1) und zweiten Biomoleküle (2) jeweils in einem Lösungsmittel gelöst oder in einem Dispersionsmittel dispergiert sind.

12. Vorrichtung zur Charakterisierung vorübergehender Wechselwirkungen zwischen Biomolekülen (1, 2), aufweisend:

    - einen Behälter (13a), der dazu eingerichtet ist, eine Mischung aus ersten Biomolekülen (1), zweiten Biomolekülen (2) und einer Vielzahl von plasmonischen Nanopartikeln (3), die so konfiguriert sind, dass mindestens ein Teil der ersten Biomoleküle (1) daran haften kann, wobei mindestens ein Teil der zweiten Biomoleküle (2) vorübergehend mit den an den Nanopartikeln (3) haftenden ersten Biomolekülen (1) interagieren kann, aufzunehmen,
    - eine Bestrahlungseinheit (10), die dazu eingerichtet ist, die Mischung mit einer ersten elektromagnetischen Strahlung (4) zu bestrahlen,
    - eine Detektionseinheit (7a, 7b, 14 - 17, 19, 19a, 19b), die dazu eingerichtet ist, zweite elektromagnetische Strahlung (5), die von der Mischung gestreut wird, während sie mit der ersten elektromagnetischen Strahlung (4) bestrahlt wird, zeitaufgelöst und spektral aufgelöst zu erfassen, um Intensitätssignale zu erhalten, die Änderungen im Spektrum der erfassten zweiten elektromagnetischen Strahlung (5) repräsentieren, und
    - eine Verarbeitungseinheit (18), die dazu eingerichtet ist, mindestens einen Wechselwirkungsparameter, wie beispielsweise $k_{on}$, $k_{off}$ oder $K_D$, zu bestimmen, der vorübergehende Wechselwirkungen der zweiten Biomoleküle (2) mit den ersten Biomolekülen (1) auf der Grundlage der Intensitätssignale charakterisiert,

**dadurch gekennzeichnet, dass** die Detektionseinheit aufweist:

    - einen Strahlteiler (14), der dazu eingerichtet ist, die zweite elektromagnetische Strahlung (5) in einen ersten Teilstrahl (5a) und einen zweiten Teilstrahl (5b) aufzuteilen, eine Weglängendifferenz-Erzeugungseinheit (15a, 15b, 16), die dazu eingerichtet ist, eine oder mehrere unterschiedliche Weglängendifferenzen zwischen dem ersten Teilstrahl (5a, 5a') und dem zweiten Teilstrahl (5b, 5b') zu erzeugen, wobei der erste Teilstrahl (5a') und der zweite Teilstrahl (5b') für jede der Weglängendifferenzen sich überlagern können, um einen ersten Interferenzstrahl (6a) und einen zweiten Interferenzstrahl (6b) für jede der Weglängendifferenzen zu erhalten, und zwei separate Detektoren (7a, 7b), die so konfiguriert sind, dass sie den ersten Interferenzstrahl (6a) und den zweiten Interferenzstrahl (6b) zu unterschiedlichen Zeiten und für jede der Weglängendifferenzen separat erfassen, um zwei Reihen von Intensitätssignalen zu erhalten, die die Intensitäten des ersten Interferenzstrahls (6a) bzw. des zweiten Interferenzstrahls (6b) zu den unterschiedlichen Zeiten und für die unterschiedlichen Weglängendifferenzen repräsentieren, oder
    - mindestens ein Spektralteilungselement (19; 14, 19a, 19b), insbesondere ein dichroitisches optisches Element (19), das dazu eingerichtet ist, die zweite elektromagnetische Strahlung (5) zu reflektieren und/oder durchzulassen, um mindestens einen ersten Teilstrahl (8a) elektromagnetischer Strahlung mit einem ersten Spektrum und mindestens einen zweiten Teilstrahl (8b) elektromagnetischer Strahlung mit einem zweiten Spektrum, das sich vom ersten Spektrum unterscheidet, zu erhalten, und zwei separate Detektoren (7a, 7b), die dazu eingerichtet sind, den ersten Teilstrahl (8a) und den zweiten Teilstrahl (8b) zu unterschiedlichen Zeiten separat zu erfassen, um zwei Reihen von Intensitätssignalen zu erhalten, die die Intensitäten des ersten Teilstrahls (8a) bzw. des zweiten Teilstrahls (8b) zu den unterschiedlichen Zeiten und für das erste und zweite Spektrum repräsentieren.

13. Vorrichtung nach Anspruch 12, wobei die erste elektromagnetische Strahlung (4) dazu eingerichtet ist, eine Oberflächenplasmonresonanz der Nanopartikel (3) zu verursachen und/oder anzuregen, wobei insbesondere eine oder mehrere Wellenlängen oder Energien der ersten elektromagnetischen Strahlung (4) mit einer oder mehreren Wellenlängen bzw. Energien der Oberflächenplasmonresonanz übereinstimmen.

**14.** Vorrichtung nach Anspruch 12 oder 13, wobei das mindestens eine Spektralteilungselement (19; 14, 19a, 19b), insbesondere das dichroitische optische Element (19), dazu eingerichtet ist, die zweite elektromagnetische Strahlung (5) so zu reflektieren und/oder durchzulassen, dass eine oder mehrere Wellenlängen oder Frequenzen des ersten Spektrums und/oder des zweiten Spektrums mit einer oder mehreren Wellenlängen bzw. Energien der Oberflächenplasmonresonanz übereinstimmen.

**15.** System zur Charakterisierung vorübergehender Wechselwirkungen zwischen Biomolekülen (1, 2), wobei das System die Vorrichtung gemäß einem der Ansprüche 12 bis 14 aufweist und

- eine Vielzahl von plasmonischen Nanopartikeln (3), die so konfiguriert sind, dass erste Biomoleküle (1) daran haften können, und/oder
- eine Mischung, die eine Vielzahl von plasmonischen Nanopartikeln (3), die so konfiguriert sind, dass erste Biomoleküle (1) daran haften können, erste Biomoleküle (1) und zweite Biomoleküle (2) aufweist.

**Revendications**

**1.** Procédé pour caractériser des interactions transitoires entre des biomolécules (1, 2) comprenant les étapes suivantes :

- la fourniture d'une pluralité de nanoparticules plasmoniques (3) qui sont configurées pour permettre à des premières biomolécules (1) d'y adhérer,
- la fourniture d'un mélange comprenant les nanoparticules (3), premières biomolécules (1) et secondes biomolécules (2) pour permettre aux premières biomolécules (1) d'adhérer aux nanoparticules (3) et pour permettre aux secondes biomolécules (2) d'interagir de façon transitoire avec les premières biomolécules (1) adhérant aux nanoparticules (3),
- l'irradiation du mélange avec un premier rayonnement électromagnétique (4),
- la détection d'un second rayonnement électromagnétique (5), qui est diffusé par le mélange tout en irradiant le mélange avec le premier rayonnement électromagnétique (4), d'une manière résolue en temps et résolue en spectre de manière à obtenir des signaux d'intensité représentant des changements dans le spectre du second rayonnement électromagnétique (5) détecté, et
- la détermination d'au moins un paramètre d'interaction, tel que $k_{on}$, $k_{off}$ ou $k_D$, caractérisant les interactions transitoires des secondes biomolécules (2) avec les premières biomolécules (1) sur la base des signaux d'intensité,

**caractérisé en ce que** l'étape de détection du second rayonnement électromagnétique comprend

- la division du second rayonnement électromagnétique en un premier faisceau partiel et un second faisceau partiel, la fourniture d'une ou plusieurs différences de longueur de trajet ($\delta$) différentes entre le premier faisceau partiel et le second faisceau partiel, la superposition du premier faisceau partiel et du second faisceau partiel pour chacune des différences de longueur de trajet ($\delta$) de manière à obtenir un premier faisceau d'interférence et un second faisceau d'interférence pour chacune des différences de longueur de trajet (5), et la détection séparée du premier faisceau d'interférence et du second faisceau d'interférence, au moyen de deux détecteurs distincts à différents moments et pour chacune des différences de longueur de trajet ($\delta$) de manière à obtenir deux séries de signaux d'intensité représentant des intensités du premier faisceau d'interférence et du second faisceau d'interférence, respectivement, aux différents moments et pour les différences de longueur de trajet ($\delta$) différentes, ou
- l'application du second rayonnement électromagnétique à au moins un élément de division spectrale (19 ; 14, 19a, 19b), en particulier un élément optique dichroïque (19), de manière à obtenir au moins un premier faisceau partiel de rayonnement électromagnétique ayant un premier spectre et au moins un second faisceau partiel de rayonnement électromagnétique ayant un second spectre qui est différent du premier spectre, et la détection séparée du premier faisceau partiel et du second faisceau partiel au moyen de deux détecteurs distincts à différents moments de manière à obtenir deux séries de signaux d'intensité représentant des intensités du premier faisceau partiel et du second faisceau partiel, respectivement, aux différents moments et pour le premier et second spectre.

**2.** Procédé selon la revendication 1 comprenant en outre la détermination d'au moins une fonction d'autocorrélation temporelle (fonction d'autocorrélation intensité-temps) caractérisant une autocorrélation temporelle d'une combinaison des deux séries de signaux d'intensité, dans lequel au moins un paramètre de diffusion caractérisant une diffusion des nanoparticules dans le mélange est déterminé sur la base de l'au moins une fonction d'autocorrélation temporelle.

**3.** Procédé selon la revendication 1 ou 2 comprenant en outre la détermination d'au moins une fonction de corrélation croisée temporelle (fonction de corrélation croisée intensité-temps) caractérisant une corrélation croisée temporelle entre les deux séries de signaux d'intensité, dans lequel l'au moins un paramètre d'interaction est déterminé sur la base de l'au moins une fonction de corrélation croisée temporelle et facultativement également de l'au moins une fonction d'autocorrélation temporelle.

**4.** Procédé selon la revendication 2 ou 3, dans lequel l'au moins une fonction d'autocorrélation temporelle et/ou l'au moins une fonction de corrélation croisée temporelle est déterminée pour les différences de longueur de trajet ($\delta$) différentes entre le premier faisceau partiel et le second faisceau partiel ou pour le premier et second spectre, respectivement.

**5.** Procédé selon l'une quelconque des revendications 2 à 4, dans lequel la fonction d'autocorrélation temporelle (fonction d'autocorrélation intensité-temps) est utilisée pour corriger la fonction de corrélation croisée temporelle (fonction de corrélation croisée intensité-temps) pour éliminer les effets de diffusion de nanoparticules sur la fonction de corrélation croisée temporelle.

**6.** Procédé selon la revendication 5, dans lequel l'au moins un paramètre d'interaction est déterminé sur la base, en particulier uniquement sur la base, de la fonction de corrélation croisée d'intensité corrigée.

**7.** Procédé selon l'une quelconque des revendications 3 à 6 comprenant en outre la transformation de Fourier des fonctions de corrélation croisée temporelle, qui sont déterminées pour les différences de longueur de trajet différentes, par rapport à la dimension des différences de longueur de trajet de manière à obtenir des fonctions de corrélation spectrale (fonction de corrélation spectrale-temps) à différents moments et pour différents changements de longueur d'onde, dans lequel l'au moins un paramètre d'interaction est déterminé sur la base des fonctions de corrélation spectrale.

**8.** Procédé selon la revendication 7 comprenant en outre la détermination d'un comportement dans le temps des fonctions de corrélation spectrale, dans lequel l'au moins un paramètre d'interaction est déterminé sur la base du comportement dans le temps des fonctions de corrélation spectrale et/ou des fonctions de corrélation d'intensité.

**9.** Procédé selon l'une quelconque des revendications précédentes, dans lequel la détermination de l'au moins un paramètre d'interaction, tel que $k_{on}$, $k_{off}$ ou $k_D$, comporte la détermination d'au moins un paramètre caractérisant les interactions réversibles entre les premières et secondes biomolécules (1, 2).

**10.** Procédé selon l'une quelconque des revendications précédentes, dans lequel la détermination de l'au moins un paramètre d'interaction, tel que $k_{on}$, $k_{off}$ ou $k_D$, comporte la détermination d'au moins l'un des éléments suivants :

- un premier taux de transition, $k_{on}$, caractérisant un taux temporel auquel se produisent des transitions entre un état non lié, dans lequel les secondes biomolécules (2) ne sont pas liées et/ou n'interagissent pas avec les premières biomolécules (1), et un état lié, dans lequel les secondes biomolécules (2) sont liées et/ou interagissent avec les premières biomolécules (1), et/ou
- un second taux de transition, $k_{off}$, caractérisant un taux temporel auquel se produisent des transitions entre un état lié, dans lequel les secondes biomolécules (2) sont liées et/ou interagissent avec les premières biomolécules (1), et un état non lié, dans lequel les secondes biomolécules (2) ne sont pas liées et/ou n'interagissent pas avec les premières biomolécules (1), et/ou
- une constante de dissociation, $k_D$, caractérisant une tendance des premières et secondes biomolécules (1, 2) à se dissocier réversiblement entre un état lié, dans lequel les secondes biomolécules (2) sont liées et/ou interagissent avec les premières biomolécules (1), et un état non lié, dans lequel les secondes biomolécules (2) ne sont pas liées et/ou n'interagissent pas avec les premières biomolécules (1).

**11.** Procédé selon l'une quelconque des revendications précédentes, dans lequel le mélange comprenant les nanoparticules (3), premières biomolécules (1) et secondes biomolécules (2) est une solution et/ou dispersion, dans lequel les nanoparticules (3), premières biomolécules (1) et secondes biomolécules (2) sont dissoutes dans un solvant ou dispersées dans un agent de dispersion, respectivement.

**12.** Appareil pour caractériser des interactions transitoires entre des biomolécules (1, 2) comprenant :

- un réceptacle (13a) configuré pour recevoir un mélange comprenant des premières biomolécules (1), des secondes biomolécules (2) et une pluralité de nanoparticules plasmoniques (3) qui sont configurées pour permettre à au moins une partie des premières biomolécules (1) d'y adhérer, dans lequel au moins une partie des secondes biomolécules (2) sont autorisées à interagir temporairement avec les premières biomolécules (1) adhérant aux nanoparticules (3),

- une unité d'irradiation (10) configurée pour irradier le mélange avec le premier rayonnement électromagnétique (4),

- une unité de détection (7a, 7b, 14 - 17, 19, 19a, 19b) configurée pour détecter un second rayonnement électromagnétique (5), qui est diffusé par le mélange tout en étant irradié avec le premier rayonnement électromagnétique (4), d'une manière résolue en temps et résolue en spectre de manière à obtenir des signaux d'intensité représentant des changements dans le spectre du second rayonnement électromagnétique (5) détecté, et

- une unité de traitement (18) configurée pour déterminer au moins un paramètre d'interaction, tel que $k_{on}$, $k_{off}$ ou $k_D$, caractérisant les interactions transitoires des secondes biomolécules (2) avec les premières biomolécules (1) sur la base des signaux d'intensité,

**caractérisé en ce que** l'unité de détection comprend :

- un séparateur de faisceau (14) configuré pour diviser le second rayonnement électromagnétique (5) en un premier faisceau partiel (5a) et un second faisceau partiel (5b), une unité de génération de différence de longueur de trajet (15a, 15b, 16) configurée pour fournir une ou plusieurs différences de longueur de trajet différentes entre le premier faisceau partiel (5a, 5a') et le second faisceau partiel (5b, 5b'), dans lequel le premier faisceau partiel (5a') et le second faisceau partiel (5b') sont autorisés à se superposer pour chacune des différences de longueur de trajet de manière à obtenir un premier faisceau d'interférence (6a) et un second faisceau d'interférence (6b) pour chacune des différences de longueur de trajet, et deux détecteurs (7a, 7b) distincts qui sont configurés pour détecter séparément le premier faisceau d'interférence (6a) et le second faisceau d'interférence (6b) à différents moments et pour chacune des différences de longueur de trajet de manière à obtenir deux séries de signaux d'intensité représentant des intensités du premier faisceau d'interférence (6a) et second faisceau d'interférence (6b), respectivement, aux différents moments et pour les différences de longueur de trajet différentes, ou

- au moins un élément de division spectrale (19 ; 14, 19a, 19b), en particulier un élément optique dichroïque (19), configuré pour réfléchir et/ou transmettre le second rayonnement électromagnétique (5) de manière à obtenir au moins un premier faisceau partiel (8a) de rayonnement électromagnétique ayant un premier spectre et au moins un second faisceau partiel (8b) de rayonnement électromagnétique ayant un second spectre qui est différent du premier spectre, et deux détecteurs (7a, 7b) distincts qui sont configurés pour détecter séparément le premier faisceau partiel (8a) et le second faisceau partiel (8b) à différents moments de manière à obtenir deux séries de signaux d'intensité représentant des intensités du premier faisceau partiel (8a) et second faisceau partiel (8b), respectivement, aux différents moments et pour le premier et second spectre.

13. Appareil selon la revendication 12, dans lequel le premier rayonnement électromagnétique (4) est configuré pour provoquer et/ou exciter une résonance plasmon de surface des nanoparticules (3), en particulier une ou plusieurs longueurs d'onde ou énergies du premier rayonnement électromagnétique (4) correspondent à une ou plusieurs longueurs d'onde ou énergies, respectivement, de la résonance plasmon de surface.

14. Appareil selon la revendication 12 ou 13, dans lequel l'au moins un élément de division spectrale (19 ; 14, 19a, 19b), en particulier l'élément optique dichroïque (19), est configuré pour réfléchir et/ou transmettre le second rayonnement électromagnétique (5) de sorte qu'une ou plusieurs longueurs d'onde ou fréquences du premier spectre et/ou du second spectre correspondent à une ou plusieurs longueurs d'onde ou énergies, respectivement, de la résonance plasmon de surface.

15. Système pour caractériser des interactions transitoires entre des biomolécules (1, 2), le système comprenant l'appareil selon l'une quelconque des revendications 12 à 14 et

- une pluralité de nanoparticules plasmoniques (3) qui sont configurées pour permettre aux premières biomolécules (1) d'y adhérer et/ou
- un mélange comprenant une pluralité de nanoparticules plasmoniques (3), qui sont configurées pour permettre aux premières biomolécules (1) d'y adhérer, des premières biomolécules (1) et des secondes biomolécules (2).

a)

b)

Fig. 1

Fig. 2

Fig. 3a

Fig. 3b

EP 4 320 425 B1

Fig. 3c

23

Fig. 4

Fig. 5

c) **Spectral-Correlation**

d) **Spectral Correlation**

**Fig. 5**

Fig. 6

a)

b)

Spectral Correlation

Fig. 7

Fig. 8

Fig. 9

a)

b)

Fig. 10

Fig. 11

**EP 4 320 425 B1**

## REFERENCES CITED IN THE DESCRIPTION

**Patent documents cited in the description**

- WO 2016075229 A1

**Non-patent literature cited in the description**

- **MAIER, S. A.** Plasmonics: fundamentals and applications. Springer Science & Business Media, 2007

- **BROKMANN et al.** Photon-correlation Fourier spectroscopy. *Optics express*, 2006, vol. 14 (13), 6333-6341